Europäisches Patentamt

European Patent Office

Office européen des brevets

(19)

(11) EP 1 122 674 A2

(12) EUROPEAN PATENT APPLICATION

(43) Date of publication:
08.08.2001 Bulletin 2001/32

(51) Int Cl.⁷: G06F 17/60

(21) Application number: 01300011.2

(22) Date of filing: 03.01.2001

(84) Designated Contracting States:
AT BE CH CY DE DK ES FI FR GB GR IE IT LI LU
MC NL PT SE TR
Designated Extension States:
AL LT LV MK RO SI

(30) Priority: 02.02.2000 JP 2000025612

(71) Applicant: KABUSHIKI KAISHA TOSHIBA
Kawasaki-shi, Kanagawa-ken 210-8572 (JP)

(72) Inventors:
• Sugiyama, Hiroshi, c/o Intellectual Property Div.
Tokyo (JP)
• Doi, Miwako, c/o Intellectual Property Division
Tokyo (JP)

(74) Representative: Midgley, Jonathan Lee
Marks & Clerk
57-60 Lincoln's Inn Fields
GB-London WC2A 3LS (GB)

(54) **A settlement system using purchase information**

(57) A settlement system includes an information distribution apparatus, a terminal apparatus, and a sales apparatus. The information distribution apparatus distributes purchase information such as a coupon or a recommendation to the terminal apparatus of a user. The terminal apparatus sends the purchase information to the sales apparatus in case the user purchases a commodity or utilizes a service. The sales apparatus sends the use result of the purchase information to the terminal apparatus after a settlement of the commodity or the service is executed. The terminal apparatus sends the use result as use log information to the information distribution apparatus. The information distribution apparatus stores the use log information of each user and utilizes the use log information in order to distribute the purchase information suitable for the user the next time. By transmitting electronic data among these apparatuses without a paper medium, the user conveniently utilizes the purchase information.

FIG. 1

**Description**

FIELD OF THE INVENTION

The present invention relates to a settlement system to distribute purchase information to a user's terminal and execute a settlement processing using purchase result stored in the terminal when the user purchases a commodity or utilizes a service using the purchase information in a sales apparatus.

BACKGROUND OF THE INVENTION

In a present time, if a user hands a coupon as a booklet or a printed leaflet to a cashier in a register counter of a store in case of payment for purchasing a commodity, a service to discount the amount of money is normally executed. For example, if the user submits the coupon of special commodity to discount $1, the user can purchase the special commodity of $10 for $9. A plurality of methods to distribute the coupon are selectively used. In this case, a distribution of paper medium is mainly used. For example, a distribution at a shop counter, a distribution of leaflet at a station, an inserted bill in a newspaper, or an advertisement column in a magazine, are used for the distribution of coupons. The user brings the coupon as the paper or leaflet to the store. When the user clears accounts of commodities at the register counter in the store, he cuts off the coupon of the object commodity from the leaflet and submits the necessary number of the coupons to the cashier.

As another method to distribute the coupon, information on the Internet (For example, a Web page) is accessed and a predetermined page including a coupon is printed out. In this case, the user brings a coupon as the print paper to the store and receives a discount service. In this method, the user can retrieve his desired coupon through the Internet. However, the user must possess a printer and bring a paper coupon to the store.

Furthermore, recently, a method to receive a coupon through a cellular-phone or a pager including a display is used. In this method, an image or numeral array is output on the display of the cellular-phone or the pocket bell. The user presents the display to a clerk of the store and receives a discount service. In this case, the user need not bring the paper coupon to the store. However, the user must be always conscious of which coupons are stored in his cellular-phone or pager in order to utilize the coupon. In addition to this, he can only utilize the information sent by a predetermined company of information distribution.

Accordingly, the development of a system for everyone to easily utilize the coupon is desired.

Furthermore, in a convenience store, new available all over the country and necessary for daily life, in addition to sales of commodities, various kinds of services such as payment of utility bills (gas, water, telephone), a purchase of a ticket, and a payment of a commodity offered by Internet shopping are executed. In order to utilize these services, a barcode printed on a transfer sheet is input by a scanner of POS (Point of Sales) located at a register counter of the convenience store for settlement. In short, this settlement is executed by the barcode. Originally, this settlement can be executed by sending electrical information represented by the barcode to a POS terminal. In other words, a form to process using the paper medium is not necessary. Furthermore, this service information is mainly obtained from the Internet. Therefore, in case of retrieving information or shopping through the Internet, the user must connect his personal computer to the Internet and output necessary information through the printer. It is more rational that necessary information is transferred to his portable terminal by a wireless connection.

In short, recently, the portable terminal such as the cellular-phone is widely used and a great number of persons carry them in daily life. Therefore, in order to improve the service for the user, it is desired that the portable terminal is utilized for a distribution of the coupon, a settlement of purchasing the commodity, and a payment of charge at the convenience store.

SUMMARY OF THE INVENTION

It is an object of the present invention to provide a settlement system to prepare a function for transferring purchase information in a terminal apparatus of the user, and to utilize the purchase information for a distribution of coupons, a payment of charges, and a settlement service in a sales apparatus.

According to the present invention, there is provided a settlement system using purchase information, comprising: an information distribution apparatus including, a purchase information memory configured to store purchase information used for a user to purchase a commodity or utilize a service in a sales apparatus; a purchase information selection unit configured to select the purchase information to be distributed to a terminal apparatus of the user from said purchase information memory; a communication unit configured to send the purchase information selected to the terminal apparatus and receive a use log information as a use result of the purchase information from the terminal apparatus; a use log memory configured to store a use record of the purchase information for each user according to the use log information; the terminal apparatus of the user including, a communication unit configured to communicate to the outside world; a purchase information memory configured to store the purchase information sent by the information distribution apparatus through said communication unit; a display unit configured to display the purchase information stored in said purchase information memory; an operation unit configured to select the purchase information from displayed purchase information, the selected purchase information being sent to the sales apparatus through said communication unit; a use log memory configured to store use log information as a use result of the purchase information sent by the sales apparatus through said communication unit, the use log information being sent to the information distribution apparatus through said communication unit; and the sales apparatus including, a communication unit configured to communicate to the terminal apparatus of the user; a purchase information decision unit configured to decide a classification of the purchase information sent by the terminal apparatus through said communication unit; a settlement program memory configured to store a plurality of settlement programs each corresponding to each classification of the purchase information; a settlement unit configured to select a settlement program corresponding to the classification of the purchase information decided by said purchase information decision unit from the plurality of settlement programs, and execute a settlement processing of the purchase information using the settlement program, a use result of the purchase information being sent to the terminal apparatus through said communication unit.

Further in accordance with the present invention, there is also provided an information distribution apparatus, comprising: a purchase information memory configured to store purchase information used for a user to purchase a commodity or utilize a service; a purchase information selection unit configured to select the purchase information to be distributed to a terminal apparatus of the user from said purchase information memory; a communication unit configured to send the purchase information selected to the terminal apparatus and receive use log information as a use result of the purchase information from the terminal apparatus; and a use log memory configured to store a use record of the purchase information for each user according to the use log information.

Further in accordance with the present invention, there is also provided a terminal apparatus of a user, comprising: a communication unit configured to communicate to the outside world; a purchase information memory configured to store purchase information sent by an information distribution apparatus through said communication unit, the purchase information being used for the user to purchase a commodity or utilize a service in a sales apparatus; a display unit configured to display the purchase information stored in said purchase information memory; an operation unit configured to select the purchase information from displayed purchase information, the selected purchase information being sent to the sales apparatus through said communication unit; and a use log memory configured to store use log information as a use result of the purchase information sent by the sales apparatus through said communication unit, the use log information being sent to the information distribution apparatus through said communication unit.

Further in accordance with the present invention, there is also provided a sales apparatus, comprising; a communication unit configured to communicate to a terminal apparatus of a user; a purchase information decision unit configured to decide a classification of purchase information sent by the terminal apparatus through said communication unit; a settlement program memory configured to store a plurality of settlement programs each corresponding to each classification of the purchase information; and a settlement unit configured to select a settlement program corresponding to the classification of the purchase information decided by said purchase information decision unit from the plurality of settlement programs, and execute a settlement processing of the purchase information by using the selected settlement program, a use result of the purchase information being sent to the terminal apparatus through said communication unit.

BRIEF DESCRIPTION OF THE DRAWINGS

Fig. 1 is a block diagram of the settlement system according to a first embodiment of the present invention.
Fig. 2 is a schematic diagram of coupon distribution in the settlement system according to the first embodiment of the present invention.
Fig. 3 is an example of purchase information in the settlement system.
Fig. 4 is an example of a location information index in the settlement system.
Fig. 5 is an example of a use log in the settlement system.
Fig. 6 is an example of the use log stored in a use log memory 24 of a terminal apparatus 20 in Fig. 1.
Fig. 7 is a flow chart of processing of a communication unit 13 of the information distribution apparatus in Fig. 1.
Fig. 8 is a flow chart of processing of the terminal apparatus 20 in Fig. 1.
Fig. 9 is an example of a screen of a display unit 22 in the terminal apparatus 20 of Fig. 1.
Fig 10 is an example of the screen to confirm the coupon in the settlement system.
Fig. 11 is a schematic diagram of distribution of recommendations in the settlement system according to the first embodiment of the present invention.
Fig. 12 is an example of recommendation information in the settlement system.
Fig. 13 is a schematic diagram of a prize or bonus subscription in the settlement system according to the first embodiment of the present invention.

Fig. 14 is an example of prize or bonus participation processing in the settlement system.

Fig. 15 is a schematic diagram of lottery service of which winning probability is varied by use times in the system according to the first embodiment of the present invention.

Fig. 16 is a schematic diagram of selection processing of course information in the system according to the first embodiment of the present invention.

Fig. 17 is a schematic diagram of payment request processing in the settlement system according to the first embodiment of the present invention.

Fig. 18 is an example of the screen to indicate a payment method in the settlement system.

Fig. 19 is an example of payment request information in the settlement system.

Fig. 20 is a block diagram of the settlement system according to a second embodiment of the present invention.

Fig. 21 is an example of the use log including an additional comment of the user in the settlement system.

Fig. 22 is an example of a selection condition of each user in the settlement system.

Fig. 23 is a block diagram of the settlement system according to a third embodiment of the present invention.

Fig. 24 is a schematic diagram of a distribution service of recommendation information in the settlement system according to the third embodiment of the present invention.

Fig. 25 is a schematic diagram of a distribution service of recommendation information in the settlement system according to a fourth embodiment of the present invention.

DETAILED DESCRIPTION OF THE PREFERRED EMBODIMENTS

Hereinafter, embodiments of the present invention are described below with reference to the drawings. In the present invention, a terminal apparatus such as a portable telephone, which is widely used and carried by many persons in daily life, stores information to be used in case of settlement by a POS terminal in the store. In this system, the settlement of purchase of commodity or the utilization of service is executed without carrying a sheet.

(The first embodiment)

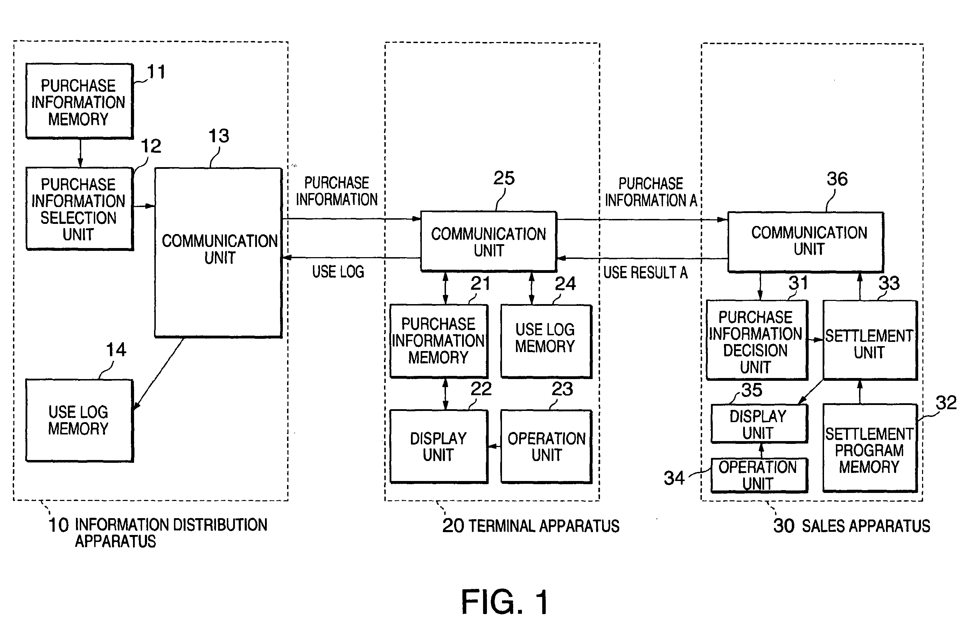

In the first embodiment, a basic system component of the present invention and the application to the coupon information are explained. Fig. 1 is a block diagram of the settlement system according to the first embodiment of the present invention. In Fig. 1, the settlement system consists of an information distribution apparatus 10, a terminal apparatus 20, and a sales apparatus 30. The information distribution apparatus 10 distributes information used for purchase activity or clearance of accounts to the terminal apparatus of a user, and receives the use result information (use log) sent by the terminal apparatus. For example, the information distribution apparatus is a Web server or a database connected to the Internet, an electronic mall based on the Web server, an Inernet terminal to access to electric mall, or a base station to transmit information by a wireless protocol such as "Bluetooth" as one system of close distance wireless communication. The information distributed by the information distribution apparatus 10 is a beneficial information to be utilized for the user to purchase a commodity, i.e., a coupon for discount, or procedure information necessary for payment of charge in case of Internet shopping. Hereinafter, these information are called "purchase information".

The terminal apparatus 20, which is carried by the user, preserves the purchase information sent by the information distribution apparatus 10, and sends the purchase information utilized for shopping to the sales apparatus in order to discount the commodity. The terminal apparatus 20 may be an exclusive terminal of this system, or may be a component including a cellular-phone, a radio, or a hearing aid as one body.

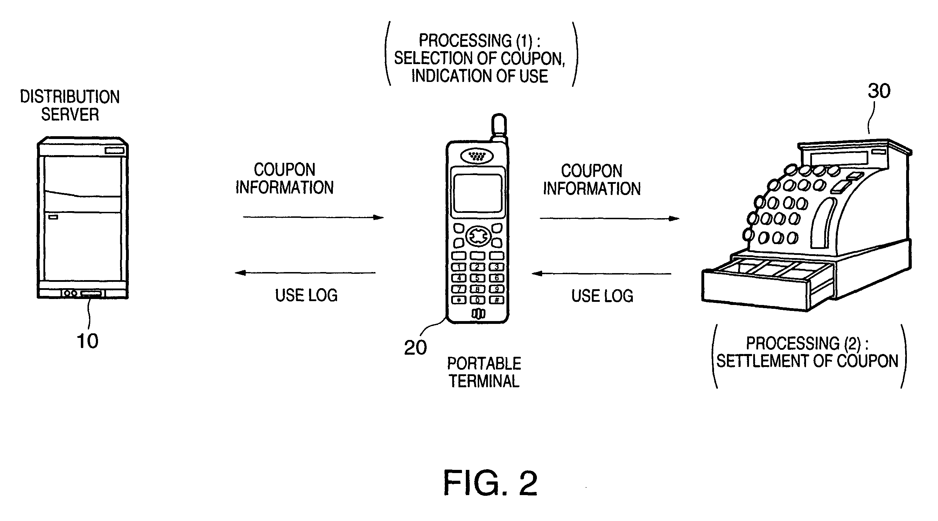

The sales apparatus 30 is a terminal for purchase activity or charge clearance, which is an apparatus to process according to the information sent by the terminal apparatus 20 carried by the user. For example, the sales apparatus is a POS terminal located at a register counter in a store. As shown in Fig. 2, the sales apparatus 30 receives a discount coupon sent by the portable terminal 20 of the user and makes a discount for payment when the user purchases a commodity. Alternatively, the sales apparatus 30 is a vending machine to automatically sell drinks or other items. In this case, the sales apparatus 30 receives actual use times of the user sent by the portable terminal 20 of the user, and executes a processing to vary a winning probability or draw lots for cola when the user purchases the drink.

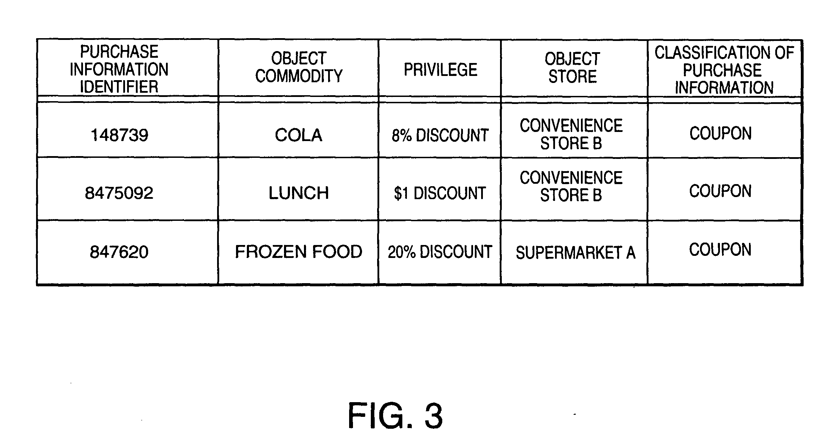

Next, an example of a component of the information distribution apparatus 10 is explained. As shown in Fig. 1, the information distribution apparatus 10 includes a purchase information memory 11, a purchase information selection unit 12, a communication unit 13, and a use log memory 14. The purchase information memory 11 stores the purchase information to be distributed. For example, the content as shown in Fig. 3 is stored. Fig. 3 is an example of coupon information as the purchase information, and each lateral one line represents the coupon information. The coupon information is consists of a "purchase information identifier" to identify the coupon, an "object commodity" representing a usable object of the coupon, a "privilege" representing a privilege or value content of the coupon, an "object store" representing a store name to utilize the coupon, and a "classification of purchase information" representing a type of the purchase information. In this example, in case of "cola" as the object commodity of the coupon, the identifier "148739" is assigned. If the user buys the cola in a "convenience store B" using coupon, the user receives an 8% discount as the privilege. In case of "lunch" as the object commodity of the coupon, the identifier "8475092" is assigned. If the user buys lunch in "convenience store B" using this coupon, the user receives $1 discount as the privilege. In case of "frozen food" as the object commodity of the coupon, the identifier "847620" is assigned. If the user buys the frozen food in "supermarket A" by using the coupon, the user receives a 20% discount as the privilege. Fig. 3 is simply one example, and other items may be added by an employment area or an employment mode of the system. Furthermore, in order to prevent unjust use of the coupon, by adding a proof information of issurance source of the coupon or a proof information representing no alteration, the coupon may be ciphered.

The purchase information selection unit 12 selects the purchase information to distribute to the portable terminal from the purchase informations stored in the purchase information memory 11. The indication of selection condition is executed by the user's selection (condition indication) or is automatically selected by location information. In the former case, the user operates an operation unit such as a screen of the portable terminal 20 or an Internet terminal accessing to the information distribution apparatus 10 in order to retrieve the desired coupon. For example, the user retrieves a coupon for a drink from the purchase information in Fig. 3. The processing of the selection unit 12 is executed by selection indication. In the latter case, a location information acquisition means such as GPS (Global Positioning System) or PHS (Personal Handy-phone system) is prepared in the terminal apparatus 20. A present location of the user is acquired by specifying a base station of information source to be accessed or an address information of the user's input. In this way, the usable purchase information at the location is selected.

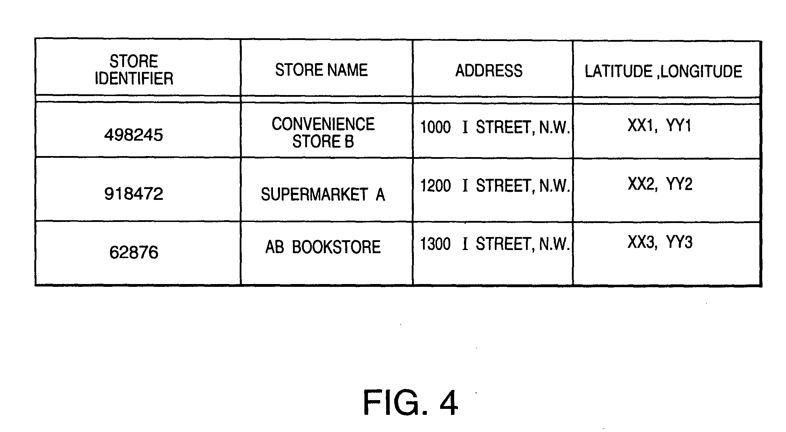

The purchase information memory 11 in the information distribution apparatus 10 stores a location information index as shown in Fig. 4. The location information index consists of a "store identifier" to identify each store, a "store name", an "address" as the seat of the store, and a "latitude and longitude" representing absolute location information on the ground. In case of "convenience store B", the address is "1000 I street, N.W.", the store identifier is "498245", and the latitude and longitude are "XX1, YY1". In case of "supermarket A", the address is "1200 I street, N.W.", the store identifier is "918472", and the latitude and longitude are "XX2, YY2". In case of "AB bookstore", the address is "1300 I street, N.W.", the store identifier is "62876", and the latitude and longitude are "XX3, YY3". Accordingly, the store usable at the user's location is retrieved according to the latitude and longitude acquired by the location information acquisition means. If the user inputs the address information of his location, the store usable at the address is retrieved.

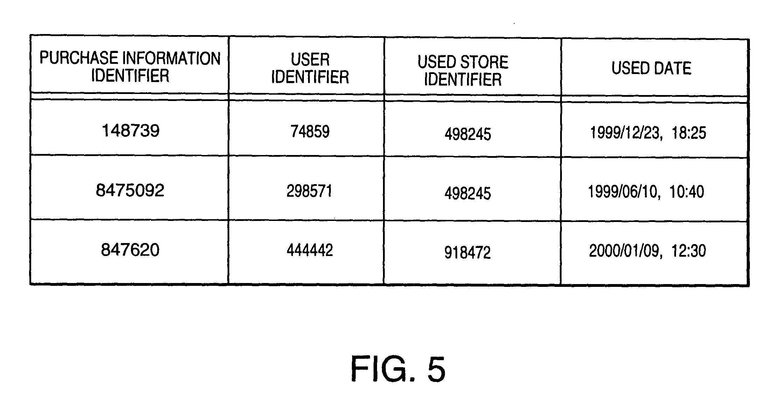

The use log memory 14 stores the use log as the use result of purchase information sent by terminal apparatus 20. Fig. 5 shows an example of the use log. In Fig. 5, each lateral one line corresponds to the use log as the use result of one purchase information. The use log consists of a "purchase information identifier", a "user identifier", and a "used store identifier", "used date". The user identifier is used to uniquely identify the terminal apparatus. For example, it may be a device number to discriminate the terminal or a communication discrimination number such as a telephone number used for communication. Furthermore, in the used data, the date and time at which the purchase information is used are recorded. In Fig. 5, the use log of the first line represents that the discount coupon for cola in Fig. 3 was utilized by the terminal apparatus 20 of terminal identifier "74859" in convenience store B at "18:25, December 23, 1999". The use log of the second line represents that the discount coupon for lunch in Fig. 3 was utilized by the terminal apparatus 20 of terminal identifier "298571" in convenience store B at "10:40, June 10, 1999". The use log of the third line represents that the discount coupon for frozen food in Fig. 3 was utilized by the terminal apparatus 20 of terminal identifier "444442" in supermarket A at "12:30, January 9, 2000".

A communication unit 13 sends the purchase information to and receives the use log from the terminal apparatus 20. As a realization means of the communication unit 13, a method to set the terminal apparatus 20 and connect by the wire, a method to connect by using a telephone call function or a packet communication function equipped in the terminal apparatus, or a wireless communication means used at close distance such as "Bluetooth" may be selectively utilized according to the status.

Next, the terminal apparatus 20 is explained. The terminal apparatus 20 includes a purchase information memory 21, a display unit 22, an operation unit 23, a use log memory 24, and a communication unit 25. The purchase information memory 23 stores the purchase information distributed by the information distribution apparatus 10, which is the same items shown in Fig. 3. The display unit 22 displays the purchase information stored in the purchase information memory 21. The operation unit 23 selects the purchase information stored in the purchase information memory 21 and indicates an operation to display the purchase information. The use log memory 24 stores the use result of the purchase information for the sales apparatus 30 using the terminal apparatus 20.

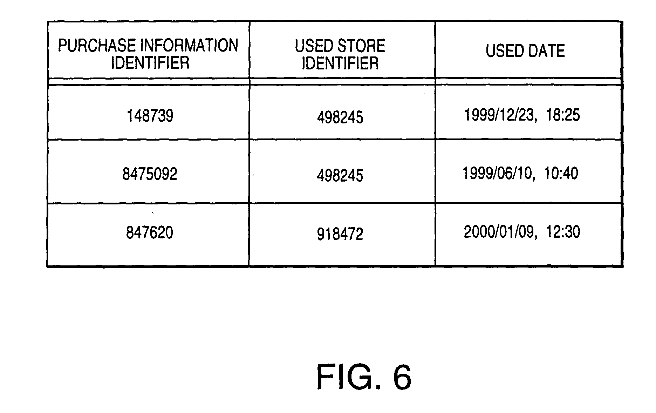

Fig. 6 is an example of the content of the use log. The use log consists of a "purchase information identifier", a "used store identifier", and "used data". The use log of the first line represents that the coupon for an 8% discount on cola of the purchase information identifier "148739" was utilized in convenience store B of the used store identifier "498245" at "18:25, December 23, 1999". The use log of the second line represents that the coupon for a $1 discount of lunch of the purchase information identifier "8475092" was utilized in convenience store B of the used store identifier "498245" at "10:40, June 10, 1999". The use log of the third line represents that the coupon for a 20% discount of frozen food of the purchase information identifier "847620" was utilized in supermarket A of the store identifier "918472" at "12:30, January 9, 2000".

The communication unit 25 sends/receives the purchase information/the use log among the information distribution apparatus 10 and the sales apparatus 30. A realization means is the same as the communication unit 13. However, different communication means may be respectively used in two cases of communication of the information distribution apparatus 10 and the sales apparatus 30. For example, in case of communication to a server where the information distribution apparatus 10 is set at an information center, the information may be distributed through means such as electronic mail. In case of communication to the sales apparatus 30 such as a vending machine actually utilized in front of the user, a wireless communication means of close distance such as "Bluetooth" may be utilized.

Next, the sales apparatus 30 is explained. The sales apparatus 30 includes a purchase information decision unit 31, a settlement program memory 32, a settlement unit 33, an operation unit 34, a display unit 35, and a communication unit 36. The purchase information decision unit 31 determines a classification of the purchase information A sent by the terminal apparatus 20 through the communication unit 36, and informs the decision result to the settlement unit 33. For example, the decision is executed by the classification of purchase information as one item of the purchase information shown in Fig. 3, and "coupon" as the decision result is informed to the settlement unit 33.

The communication unit 36 receives the purchase information from and sends the use result to the terminal apparatus 20. As a realization means, a wireless communication means of close distance such as "Bluetooth" is preferably used according to a method of the communication unit 25.

The settlement program memory 32 stores a settlement program necessary for the decision result of the purchase information decision unit 31. The settlement program memory 32 is realized by a ROM or a Hard Disk in which the settlement program is stored and read out.

The settlement unit 33 loads a necessary settlement program from the settlement program memory 32 according to the decision result of the purchase information decision unit 31, executes a settlement processing using the purchase information, and sends the use result A of the purchase information to the terminal apparatus 20 through the communication unit 36. If the decision result of the purchase information decision unit 31 is "coupon", a coupon settlement program is loaded from the settlement program memory 32. For example, the cola as the object commodity is cleared accounts by 8% discount, and the use result of the first line in Fig. 6 is sent to the terminal apparatus 20.

The operation unit 34 is a means for indicating an operation by a clerk or the user.

Next, the operation of this system is explained. In the information distribution apparatus 10, the purchase information memory 11 stores information utilized for purchase activity or charge payment by the user. The communication unit 13 obtains the requested purchase information from the purchase information memory 11 by the user's operation thorough the terminal apparatus 20, and sends it to the terminal apparatus 20. As mentioned-above, the information distribution apparatus 10 is, for example, a Web server or a database connected to the Internet, an electronic mall based on the Web server or the database, an Internet terminal accessing the electronic mall, or a base station of information source using a wireless protocol such as "Bluetooth" as one method of close distance wireless communication.

The information distributed by the information distribution apparatus 10 is useful information for the user to receive a discount such as a coupon in case of purchasing a commodity or a procedure information necessary for charge payment in case of internet shopping, i.e., the purchase information. Concretely, the purchase information memory 11 stores the purchase information to be distributed to the terminal apparatus 20 shown in Fig. 3. The coupon information consists of a purchase information identifier to discriminate the coupon, an object commodity representing a utilizable object of the coupon, a privilege representing a content or value of the coupon, an object store representing a utilizable store of the coupon, and a classification of purchase information representing a type of the coupon. The coupon information may be added as an item according to use area or use status.

The purchase information selection unit 12 selects the purchase information to be distributed to the portable terminal 20 from the purchase information stored in the purchase information memory 11. The indication of selection condition is executed by the user's selection (condition indication) or is automatically selected by location information. In the former case, the user operates an operation unit such as a screen of the portable terminal 20 or the Internet terminal of the information distribution apparatus 10 in order to retrieve a desired coupon. For example, the user retrieves a coupon for a drink from the purchase information in Fig. 3. The processing of the selection unit 12 is executed by selection indication. In the latter case, a location information acquisition means such as GPS or PHS is prepared in the terminal apparatus 20. A present location of the user is acquired by specifying a base station of information source to be accessed or an address information of the user's input. In this case, the location information shown in Fig. 4 is stored in the purchase information memory 11 in order to retrieve the location.

In this way, the purchase information selection unit 12 selects the purchase information corresponding to the selection condition from the purchase information memory 11 as information to be distributed to the terminal apparatus 20, and supplies it to the communication unit 13. The communication unit 13 sends the purchase information to the terminal apparatus 20. In the terminal apparatus 20 of the user, the communication unit 25 receives the purchase information. This purchase information is stored in the purchase information memory 21. By the user's operation through the operation unit 23, the purchase information is read from the purchase information memory 21 and output through the display unit 22. The user can confirm the purchase information on the display unit 22.

In this way, under a condition that the distributed purchase information is stored in the purchase information memory 21, the user carrying the portable terminal 20 enters a store of service operation of the purchase information for shopping. After shopping, the user clears discount of the purchased commodity at a register counter of the store. In this case, the user informs a utilization of the purchase information to a clerk of the register counter. Then, the user operates the operation unit 23 of the portable terminal 20 in order to indicate the purchase information in the purchase information memory 21 as a sending operation. In response to this operation, the corresponding purchase information is read from the purchase information memory 21 and supplied to the communication unit 25. The communication unit 25 sends the corresponding purchase information to the sales apparatus 30. In the sales apparatus, the communication unit 36 receives the sent purchase information and supplies it to the purchase information decision unit 31.

The purchase information decision unit 31 includes functions to compare the received purchase information with purchase information of service objects in the store of the sales apparatus and to decide whether the received purchase information coincides with the purchase information of any service object. As a result, in case of coincidence, by a casher's operation through the operation unit 34 in the sales apparatus 30 or by a user's operation through the operation unit 23 in the terminal apparatus 20, the utilization is indicated. In the former case, the communication unit 36 sends an extraction indication of the purchase information of the service object to the terminal apparatus 20. In the terminal apparatus 20, the communication unit 25 receives the extraction indication and supplies it to the purchase information memory 21. The corresponding purchase information is extracted from the purchase information memory 21 and supplied to the communication unit 25. After extraction, the corresponding purchase information is deleted in the purchase information memory 21. The communication unit 25 sends the extracted purchase information to the sales apparatus 30. In the latter case, in the terminal apparatus 20, the user's operation from the operation unit 23 is supplied to the purchase information memory 21. The corresponding purchase information is extracted from the purchase information memory 21 and supplied to the communication unit 25. After extraction, the corresponding purchase information is deleted in the purchase information memory 21. The communication unit 25 sends the extracted purchase information to the sales apparatus 30.

In the sales apparatus 30, the communication unit 36 receives the purchase information and supplies it to the settlement unit 33. The settlement unit 33 obtains a settlement program corresponding to the purchase information from the settlement program memory 32 and executes a settlement processing of the purchase information. The processing result is supplied to the communication unit 36 as the use result and output through the display unit 35. In short, the settlement unit 33 loads a necessary settlement program from the settlement program memory 32 according to the decision result of the purchase information decision unit 31, executes a settlement processing using the purchase information, and sends the use result A of the purchase information to the terminal apparatus 20 through the communication unit 36. For example, if the decision result of the purchase information decision unit 31 is "a coupon of 8% discount of cola", a coupon settlement program is loaded from the settlement program memory 32. Then, the cola as the object commodity is cleared accounts by 8% discount, and the use result of the first line in Fig. 6 is sent to the terminal apparatus 20.

In short, in the sales apparatus 30, a purchase service based on the settlement processing is applied for the user of the terminal apparatus 20. In addition to this, the communication unit 36 sends the use result supplied from the settlement unit 33 to the terminal apparatus 20. In the terminal apparatus 20, the communication unit 25 receives the use result sent from the sales apparatus 30 and stores it in the use log memory 24. In this way, in the use log memory 24 of the terminal apparatus 20, the use result of the purchase information processed by the sales apparatus 30 is stored as shown in Fig. 6. The use result information in the use log memory 24 is read out when the terminal apparatus 20 communicates to the information distribution apparatus 10, and sent to the information distribution apparatus 10 by the communication unit 25 as the use log. In the information distribution apparatus 10, the communication unit 13 receives the use log and supplies it to the use log memory 14. The use log memory 14 stores the use log information for each user.

In the present system, the information distribution apparatus 10 distributes the purchase information to the terminal apparatus 20 of the user. The purchase information is stored in the terminal apparatus 20. When the user carrying the terminal apparatus 20 goes to the store, the purchase information to be utilized in the terminal apparatus 20 is transferred to the sales apparatus 30 in the store. The use result of the purchase information utilized in the sales apparatus 30 is sent back to the terminal apparatus 20. The use result as the use log is stored in the terminal apparatus 20. When the terminal apparatus 20 of the user communicates with the information distribution apparatus 10, the use log in the terminal apparatus 20 is transferred to the information distribution apparatus 10.

In short, in the present system, the information distribution apparatus 10 sends purchase information to the terminal apparatus 20 and receives the use log from the terminal apparatus 20. The sales apparatus 30 receives the purchase information from the terminal apparatus 20, executes a service using the purchase information, and sends back the use log to the terminal apparatus 20. Accordingly, by cooperation with three apparatuses, the user can utilize a service using electronic data without carrying a paper medium. Especially, in a communication terminal device such as a cellular-phone widely used by many persons in daily life, the above-mentioned function of the terminal apparatus 20 is added in order to utilize information useful for settlement at POS terminal. In this case, a convenient system capable of settling without sheets and utilizing the coupon is realized.

Furthermore, in the present system, each user can carry the terminal apparatus 20 for his exclusive use. The purchase information for various settlement services such as a payment of a public charge, a purchase of ticket, or a receipt of price for a commodity offered through Internet shopping is distributed to the terminal apparatus 20. In case of utilizing these services, the terminal apparatus 20 sends the purchase information to the sales apparatus 30 in the store for managing the service, and the settlement processing is easily executed. In the prior art, the user brings a check sheet to the store and a barcode printed on the sheet is input by a scanner of a POS terminal at a register counter. However, in the present system, this inconvenience is removed.

Next, an application example of the present system is explained. As shown in Fig. 2, a utilization mode in case of coupon as the purchase information is explained. In this case, the information distribution apparatus 10 is a server apparatus connected to the Internet. The terminal apparatus 20 of the user equips a packet communication function and a close distance wireless protocol such as "Bluetooth" as a component of the cellular-phone. The user utilizes a coupon for the sales apparatus 30 in the store using the cellular-phone. The sales apparatus may be a vending machine. In many stores, an electronic cash register is provided as a POS terminal. Accordingly, the close distance wireless communication means such as "Bluetooth" is loaded on the POS terminal as the communication unit 36. The POS terminal receives distributed necessary information to confirm whether a coupon sent by the cellular-phone through a POS base system is correct and usable.

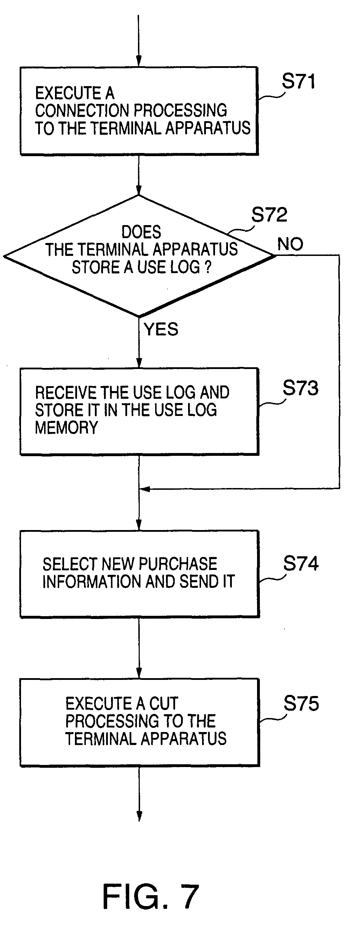

Next, communication steps between the portable terminal (the terminal apparatus) 20 and the distribution server (the information distribution apparatus) 10 are explained. Fig. 7 is a flow chart of processing of the communication unit 13 in the distribution server 10. First, the portable terminal 20 sends an access request to the distribution server 10 by the user's operation (S71). The distribution server 10 inquires of the use log memory 24 in the portable terminal 20 about whether the use log after previous access is stored (S72). If the use log is stored, the distribution server 10 requests the portable terminal 20 for sending. When the use log is received, the distribution server 10 adds a user identifier to the use log and records it in the use log memory 14 as shown in Fig. 5 (S73). The purchase information selection unit 12 selects a new coupon from the purchase information memory 11 and sends it to the portable terminal 20. In this case, the distribution server 10 may previously send a form to input a selection condition to the portable terminal 20, and may retrieve the new coupon based on the input condition through the operation unit 23 (S74). A connection to the distribution server 10 is cut by the operation from the portable terminal 29 (S75). In this way, the coupon is distributed from the distribution server 10 to the portable terminal 20, and the use log of the user is recorded in the distribution server 10.

Next, the user goes to the store to purchase a commodity and carries the portable terminal 20. After selecting a commodity, the user brings the commodity to the register counter in the store. In case of beginning a new account, the user informs a utilization of coupon to the clerk (cashier) operating a POS terminal. Hereafter, processing steps between the portable terminal 20 and the POS terminal (the sales apparatus) 30 are explained.

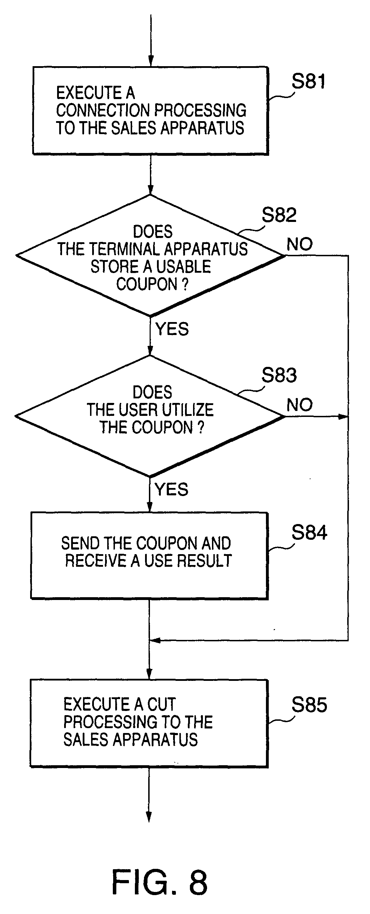

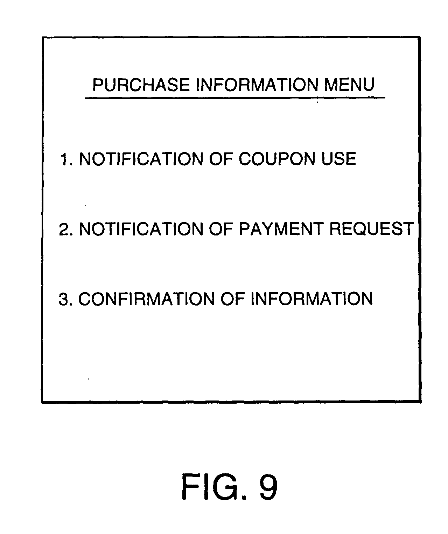

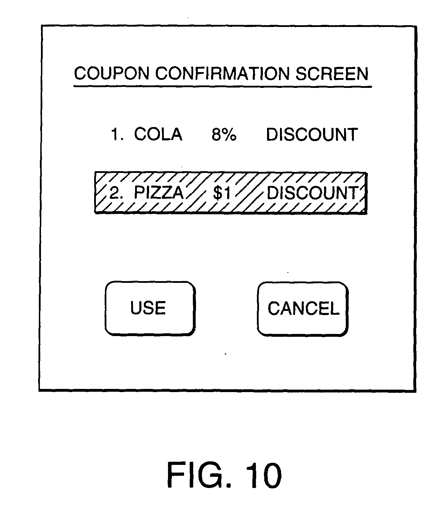

Fig. 8 is a flow chart of processing of the portable terminal 20. By the user's operation through the portable terminal 20, a connection to the POS terminal 30 is executed. For example, by operating through the operation unit 23 of the portable terminal 20, a purchase information menu is output on the display unit 22 as shown in Fig. 9. In case of using the coupon, the user selects one item "1. Notification of coupon use" on the menu screen. In this case, the communication unit 25 sends a request of connection and a notification of coupon use to the POS terminal 30 (S81). A communication between the portable terminal 20 and the POS terminal 30 is executed. It is confirmed whether a coupon corresponding to the purchase commodity input to the POS terminal is stored in the purchase information memory 21. For example, a confirmation screen shown in Fig. 10 is output on the display unit 22 of the portable terminal 22 or the display unit 35 of the POS terminal 30 (S82).

In Fig. 10, two coupons "cola 8% discount" and "pizza $1 discount" are usable. In this case, one coupon "pizza $1 discount" is selected. In case of utilizing the coupon, by the user's operation through the operation unit 23 of the portable terminal 20 or the clerk's operation through the operation unit 34 of the POS terminal 34, a utilization of the coupon is indicated. In Fig. 10, while the coupon to be utilized is selected (turn over status), a "use" icon on the screen is indicated (S83). In response to the indication, coupon data "pizza $1 discount" is read from the purchase information memory 21 of the portable terminal 20 and deleted in the purchase information memory 21. The coupon data is sent to the POS terminal 30. The POS terminal 30 processes the coupon data by a coupon settlement program and sends the use result to the portable terminal 20. After receiving the use log, the portable terminal 20 records the use log in the use log memory 24 (S84). A completion of settlement is informed from the POS terminal 30 to the portable terminal 20. In response to the completion of settlement, a connection between the POS terminal 30 and the portable terminal 20 is cut and the communication is completed (S85).

In the prior art, a coupon discount service is proceeded by a paper ticket. However, in the present invention, the coupon discount service is executed by an electronic means. Accordingly, at the store side, coupon distribution, the register counter service, collected coupon processing, and settlement processing are all simplified. At the user side, it is more convenient for a procurement of the coupon, a portability of the coupon, and actual utilization of the coupon.

In the above-mentioned example, the user spontaneously requests a utilization of the coupon. However, as a realization means of the communication unit, if a communicatable means to freely form a network between two terminals such as "Bluetooth" is used, the POS terminal 30 reads a coupon stored in the portable terminal 20 of the user, confirms whether the read coupon is utilizable, and urges the user to utilize the coupon through the display unit 22 of the portable terminal 20. In this case, the present system provides an enhanced service to the user.

In the above-mentioned first embodiment, the portable terminal such as a cellular-phone includes a function of the terminal apparatus 20 of the present invention. However, recommendation information useful in daily life is applied in order to improve a user service. Accordingly, an example capable of presentation and utilization of the recommendation information is explained as a modification.

(A modification 1)

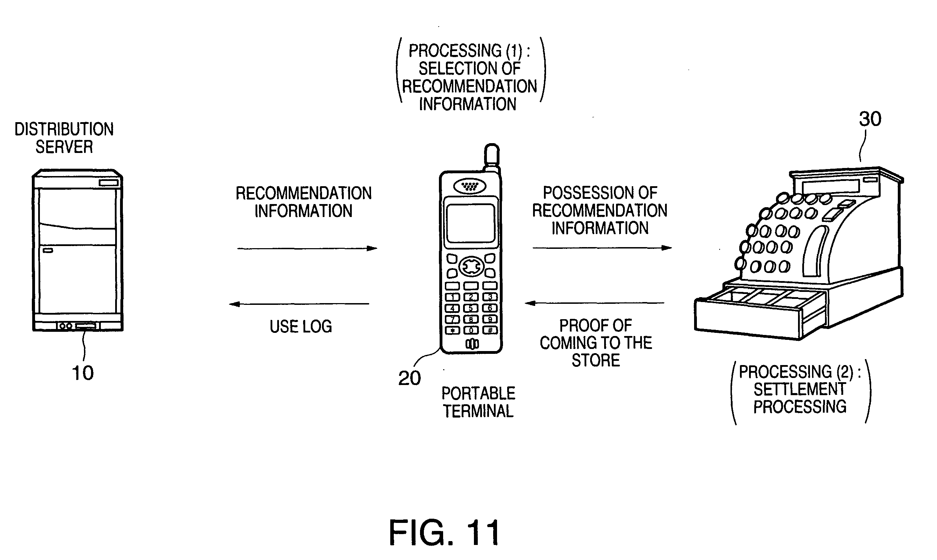

As the modification 1, a case that the purchase information is information by word of mouth or recommendation information such as " noodle shop A is good" is explained by referring to Fig. 11. In the distribution server 10, the recommendation information is registered as purchase information to be distributed to the portable terminal 20. First, the user accesses the information distribution apparatus 10 through the terminal apparatus 20, obtains the recommendation information " noodle shop A is good", and stores it in the purchase information memory 21 of the terminal apparatus 20.

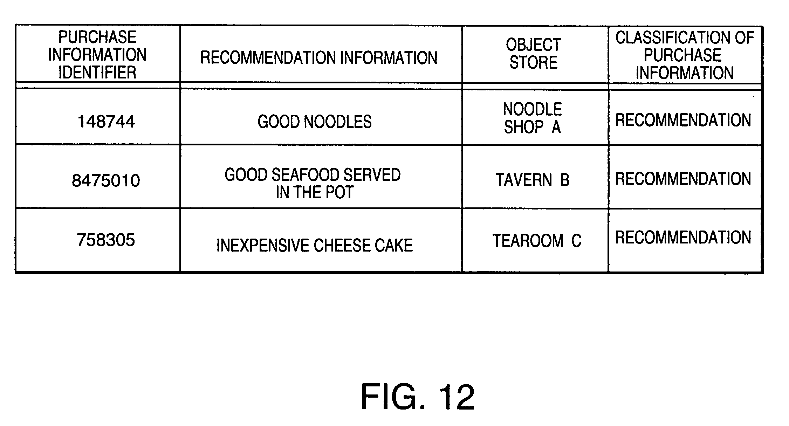

Fig. 12 is an example of the recommendation information. The recommendation information consists of "a purchase information identifier", "recommendation information", "an object store", and "a classification of purchase information". The purchase information identifier is an identifier to discriminate the information and the recommendation information is the recommendation content. The object store is a store name as a recommended target and the classification of purchase information is a class representing the recommendation.

For example, a description of the first item represents the recommendation information "noodle shop A is good". In the noodle shop A, assume that a POS terminal (the sales apparatus 30) communicates with the terminal apparatus 20 is set. Actually, the user goes to the noodle shop A and eats noodles. When the user leaves the noodle shop A, he settles an account of the price at the register counter of the shop.

In this case, a communication between the POS terminal (the sales apparatus 30) of the register counter and the terminal apparatus 20 of the user is executed, and the purchase information is read from the terminal apparatus 20. In the terminal apparatus 20 of the user, the recommendation information of the noodle shop A is already stored as one of the purchase information. Therefore, the POS terminal (the sales apparatus 30) checks whether the information to be utilized in the noodle shop A is stored in the terminal apparatus 20. As a result, the information for the noodle shop A is stored, and the settlement unit 33 of POS terminal (the sales apparatus 30) executes a settlement processing using the first information of word of mouth in Fig. 12.

In the present system, the settlement processing of the recommendation information is an issuance of proof of coming to the store by an issuance program of the proof. As shown in Fig. 12, the classification of purchase information of "the noodle shop A" is "recommendation". Accordingly, in the POS terminal (the sales apparatus 30), the settlement unit 33 selects the issuance program of the proof from the settlement program memory 32, and loads it.

The following processing is executed according to the issuance program in order to issue a proof of the user's coming to the store. First, the POS terminal 20 confirms whether recommendation information for "noodle shop A" is recorded in the purchase information memory 21 of the user's portable terminal 20. If it is recorded, the POS terminal 20 creates a use log consisting of "a purchase information identifier", "a used store identifier", and "a used date" as shown in Fig. 6, and sends it to the terminal apparatus 20. The terminal apparatus 20 receives the use log and stores the use log as the use result in the use log memory 24. In short, a fact that the user's coming to the noodle shop A is recorded in the use log memory 24 of the terminal apparatus 20.

Furthermore, at the moment that the user comes to the store, the POS terminal may confirm the recommendation information by communicating with the terminal apparatus of the user. In this case, a service peculiar to the store is presented to the user from the beginning. The use result recorded in the terminal apparatus 20 is collected by the information distribution apparatus 10 the next time the terminal apparatus 20 accesses the information distribution apparatus 10. In short, the user's utilization of the recommendation information is recorded in the use log memory 14 of the information distribution apparatus 10.

In this way, at the store side, the distributed recommendation information is confirmed to be effective, and a special service is presented to the user utilizing the information of word of mouth. Furthermore, the user of the terminal apparatus 20 can easily utilize the store by the recommendation information, and receives the special service from the store.

(A modification 2)

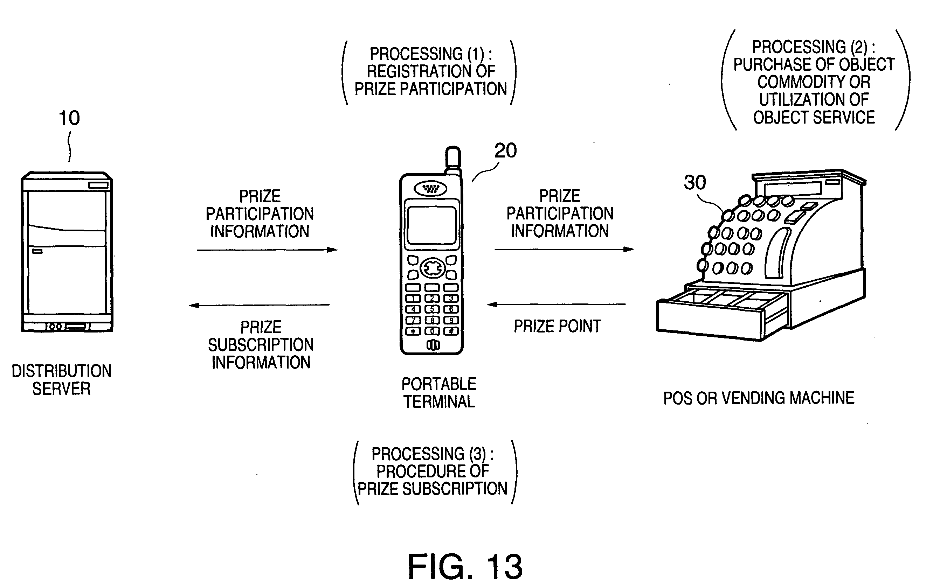

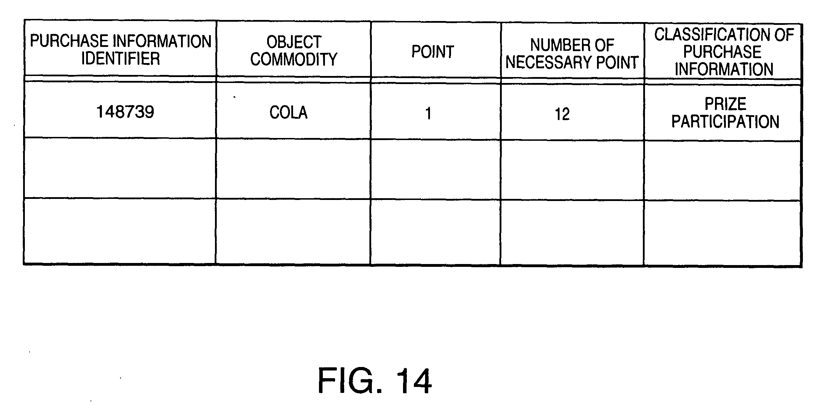

As the modification 2, a case that the purchase information is prize or bonus participation information is explained by referring to Fig. 13. For example, by collecting labels or seals of the commodity and mailing them to a sponsor of the prize, a user can participate in the prize award. This prize participation of the user is executed by the present system. First, a distribution server 10 (information distribution apparatus) previously stores prize participation information shown in Fig. 14. The user of the portable terminal 20 (terminal apparatus), who wishes to participate in the prize, obtains the prize participation information by accessing the distribution server 10. As shown in Fig. 14, the prize participation information consists of "a purchase information identifier", "an object commodity", "a point", "a number of necessary point", and "a classification of purchase information". The object commodity represents a commodity as an object of prize participation, and the point represents a number of points obtained in case of purchasing the object commodity. Usually, the prize sponsor assigns a point to a label or a seal of the commodity, and determines a number of points for one time participation. The user attaches the labels or seals for one time participation to a postal card of participation and mails the postal card. However, in the present system, the point data is transmitted to the portable terminal 20 when the user purchases the object commodity at the store or a vending machine. The number of necessary points represents a number of points necessary to participate in the prize as one share.

Next, the user purchases an object commodity at the store or the vending machine. In this case, a communication between the terminal apparatus 20 (portable terminal) and the sales apparatus 30 (POS terminal of the store or the vending machine) is executed, and the purchase information stored in the terminal apparatus 20 is sent to the sales apparatus 30. In the sales apparatus 30, the purchase information decision unit 31 checks whether the received purchase information includes a service object of the store or the vending machine.

For example, as shown in Fig. 14, a service object of the prize participation is a cola of which the purchase information identifier is "148739". In the sales apparatus 30, the purchase information decision unit 31 previously stores the purchase information "prize participation" and "148739". By using this purchase information as a decision standard, the purchase information decision unit 31 checks whether the received purchase information includes the corresponding information.

Assume that the received purchase information includes the purchase information identifier "148739" of the cola and the classification of purchase information "prize participation". Accordingly, the purchase information decision unit 31 decides that the received purchase information is the prize participation information, and the settlement unit 33 loads an issuance program of prize point from the settlement program memory 32. The settlement unit 33 executes the following processing by the issuance program. First, the sales apparatus 30 decides that the purchased commodity of the user is the same as the object commodity of the prize participation, issues a point of the prize based on item "point", and sends the issued point as the use result A to the terminal apparatus 20.

The terminal apparatus 20 obtains the issued point from the use result A sent by the sales apparatus 30, and updates a numeral of "point" corresponding to the purchase information identifier "148739" in the prize participation information by adding the issued point to the numeral. Then, the terminal apparatus 20 confirms the numeral of "point" recorded in the use log memory 24. If the numeral of "point" is equal to or above "number of necessary point" in the prize participation information, the display unit 22 outputs a procedure of prize subscription in order for the user to urge to subscribe for prize. In this case, at a step that the points necessary for prize subscription are collected, the terminal apparatus 20 informs a state capable of subscribing for the prize to the user. Accordingly, the user knows the state from the display unit 22, operates the terminal apparatus 20 to connect to the information distribution apparatus 10, and subscribes for the prize through the terminal apparatus 20.

As an operation to subscribe for the prize, an item "a registration of prize subscription" is added to the purchase information menu shown in Fig. 9. If this item is selected and the subscription is indicated by the user, the use log corresponding to the accumulated points necessary for the prize subscription is read form the use log memory 24, and the prize participation information is also read from the purchase information memory 21. The use log, the prize participation information, and the ID of the terminal apparatus 20 are sent to the information distribution apparatus 10. The read use log is deleted from the use log memory 24 in the terminal apparatus 20. On the other hand, the information distribution apparatus 10 registers the received information in a database for registration of prize subscription. At the prize sponsor side, a lottery for the prize is executed from the registered content of the database, and successful candidates are determined from subscribers. Successful candidates each having the terminal apparatus 20 are identified by ID of the terminal apparatus 20, and the prize is presented to the successful candidates.

As mentioned-above, the user can subscribe to the prize program by an easy procedure. At the prize sponsor side, a burden to attach the seal to the object commodity of the prize is removed, and goods in stock before the prize operation term are treated as the object commodity of the prize.

(A modification 3)

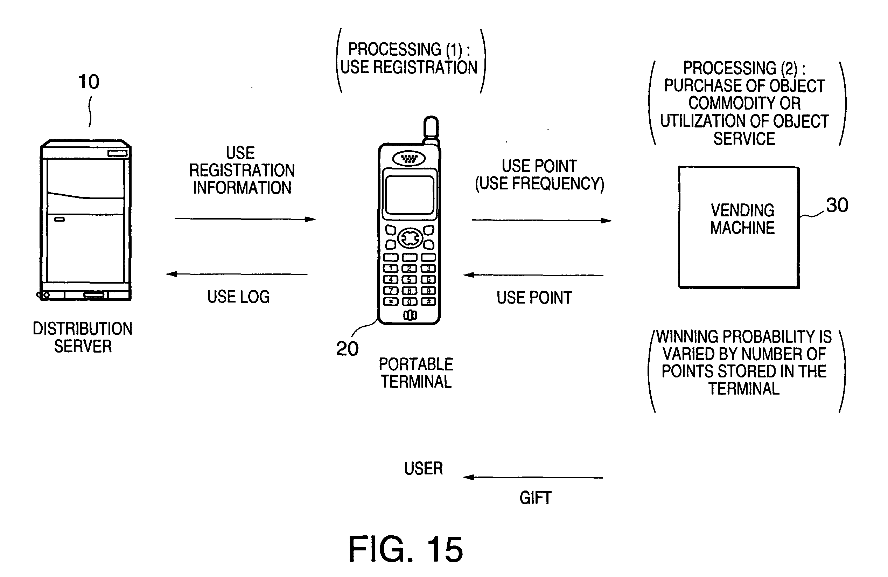

In the modification 3, an example for the prize subscription is explained. However, as shown in Fig. 15, a use frequency (the number of use times) of the user may be returned from the sales apparatus 30 to the terminal apparatus 20, and a service content for each user may change by the use frequency of each user. Accordingly, this example is explained as the modification 3.

In the same way as the prize subscription, the user communicatively connects his portable terminal 20 (the terminal apparatus) to the distribution server 10 (the information distribution apparatus), and obtains use registration information from the distribution server 10. Hereafter, by purchasing the object commodity or utilizing the service, the terminal apparatus 20 of the user receives the use frequency as the use result from the sales apparatus 30 (the POS terminal or the vending machine). When the user purchases a commodity from a vending machine 30 (the sales apparatus), the vending machine 30 receives use registration information with the stored use point from the portable terminal 20 of the user. In the vending machine 30, the settlement unit 33 loads a change program of winning probability of prize from the settlement program memory 32 as a processing program corresponding to the use registration information, and changes the winning probability of the prize according to the received use point. For example, when the user purchases a cola from the vending machine including a lottery function, the lottery is executed for the user by a higher winning probability. In short, new service of which the winning probability is high is executed according to the user's purchase results. In this way, even if the user does not purchase a predetermined commodity from a predetermined shop or vending machine, a fact that the user often purchases the predetermined commodity is informed to the sales apparatus 30. Therefore, a pliant service of which a special service is presented to a frequent user of the predetermined commodity is executed.

(A modification 4)

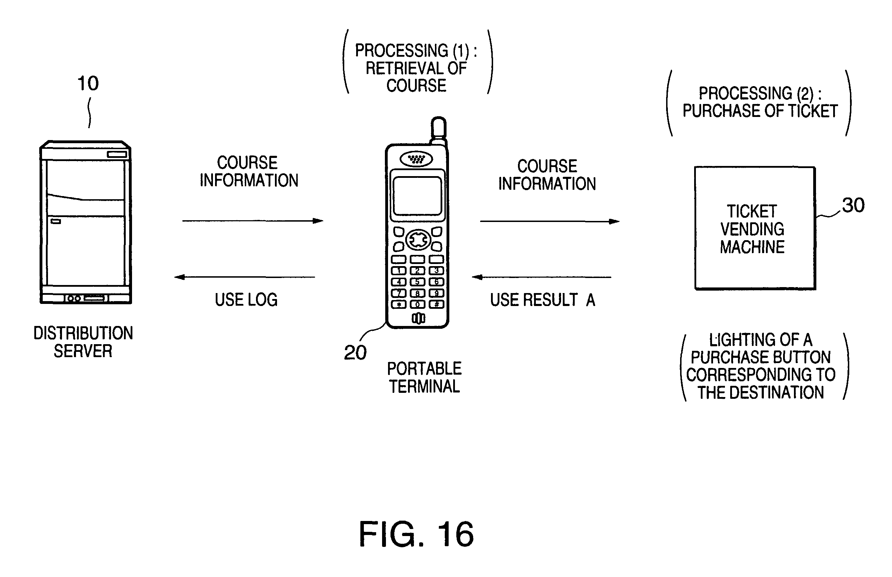

As the modification 4, a case that the purchase information is route or course information of a vehicle is explained by referring to Fig. 16. Assume that the distribution server 10 presents a course retrieval service, and the sales apparatus 30 is a ticket vending machine at a station. The portable terminal 20 is communicatively connected to the distribution server 10, and the user inputs a destination through the portable terminal 20. In response to the destination, the distribution server 10 distributes course information from the user's present place to the destination to the portable terminal 20.

Next, when the user comes in front of the ticket vending machine 30 at the station, the portable terminal 20 is communicatively connected to the ticket vending machine 30, and the portable terminal 20 sends the course information to the ticket vending machine 30. The ticket vending machine 30 lights a purchase button corresponding to the course information among a plurality of purchase buttons. The user inserts money described on the lighted purchase button into a money entrance of the vending machine 30, or the user pushes the lighted purchase button by inserting a prepaid card into a card entrance of the vending machine 30. Then, a ticket corresponding to the course information is issued from the ticket vending machine 30.

In this way, in modification 4, even if the user does not confirm a price list at the station, a purchase button corresponding to the destination is automatically lighted in the ticket vending machine 30. Therefore, a system in which the user easily purchases the ticket is realized.

(A modification 5)

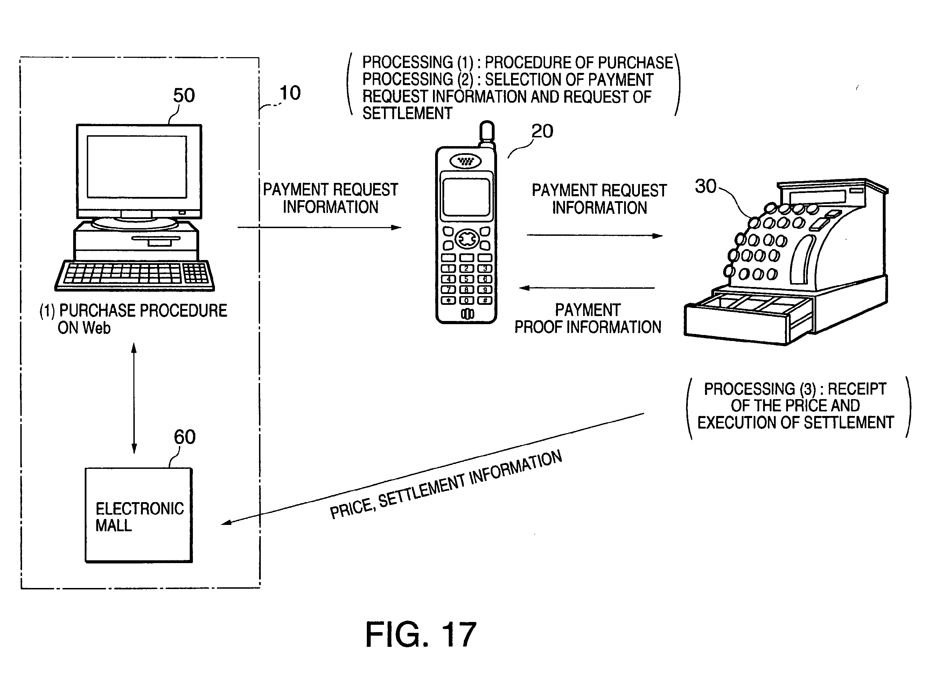

As the modification 5, when the commodity is offered through Internet shopping, an example that a payment of the commodity price is effectively executed is explained by referring to Fig. 17. In this case, the information distribution apparatus 10 is an electronic mall 60 or an Internet terminal 50 accessing to the electronic mall 60. The user selects a desired commodity through the electronic mall 60 by operating the Internet terminal 50, and executes the purchase procedure.

Normally, in case of the purchase procedure, the user inputs a credit number of his credit card through the Internet terminal 50 for the settlement. However, for a user who does not wish to input his credit number or a user who does not have a credit card, the user can pay through a convenience store by bringing a payment sheet. In this example, information printed on the payment sheet is distributed to the terminal apparatus 20 as the purchase information. By communicating to POS terminal as the sales apparatus 30, a transfer of the payment information is executed without payment sheet.

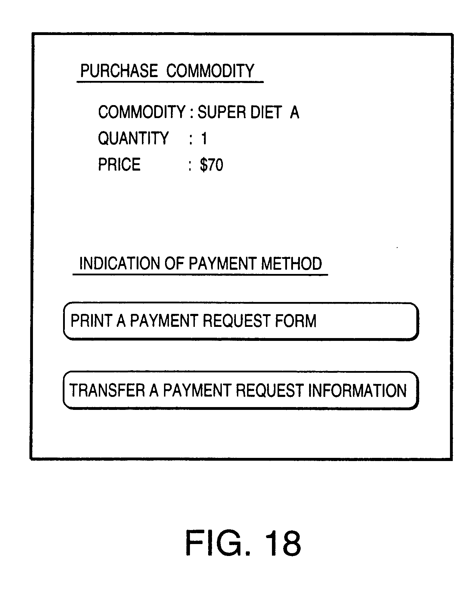

First, as shown in Fig. 17, the user executes a purchase procedure on line by operating the Internet terminal 50. Fig. 18 is one example of a procedure screen on the display of the Internet terminal 50. As an item of a purchase commodity, "commodity", "quantity", and "price" are shown. As an item of payment indication, "print a payment request form" and "transfer a payment request information" are shown. The item "print a payment request form" represents a mode to print a payment request form for the user who brings a payment request sheet of payment procedure as usual. The item "transfer a payment request information" represents a mode to send payment request information to the portable terminal 20 of the user.

In this case, assume that the user selects "transfer a payment request information" as the payment method. In Fig. 17, the Internet terminal 50 in the information distribution apparatus 10 sends the payment request information to the portable terminal 20 of the user. The portable terminal 20 receives the payment request information and records it in the purchase information memory 21. As a communication means between the information distribution apparatus 10 and the terminal apparatus 20, a means explained in the first embodiment is used.

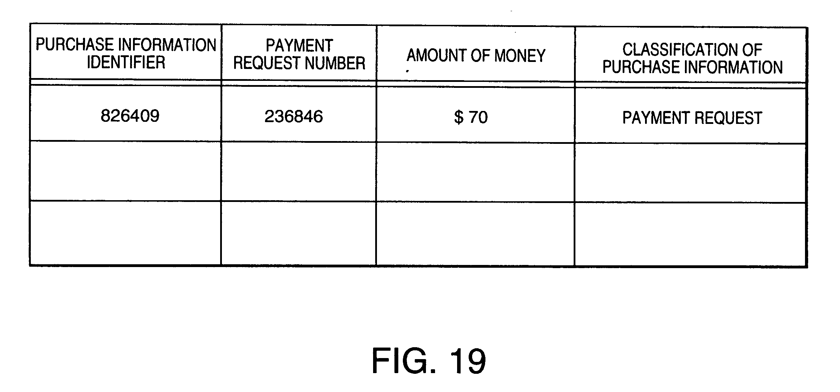

Fig. 19 is an example of the payment request information. The payment request information consists of "purchase information identifier", "payment request number", "amount of money", and "classification of purchase information". The payment request number is an identifier issued by an agency system of price payment as a base. The amount of money is a payment price. In case of shopping at an electronic mall, the classification of purchase information is a payment request.

Next, the user goes to a payment counter in the convenience store while carrying the portable terminal 20, and informs the clerk to pay at a POS terminal of the sales apparatus 30. As a notification method, in the menu of the portable terminal shown in Fig. 9, "2. Notification of payment request" is selected. Hereafter, in the same way as the above-mentioned example, a communication between both apparatuses is executed, payment information to be processed is selected, and the payment request information to be processed is sent to the POS terminal (the sales apparatus 30). In the POS terminal, a payment settlement program is loaded from the settlement program memory 32 to the settlement unit 33 because the classification of purchase information is "payment request". The settlement unit 33 executes the payment settlement program in order to settle the payment request number entried in the payment request information. Payment completion information as the use result is sent to the portable terminal 20 and recorded in the use log memory 24 in the portable terminal 20. A specification or receipt may be printed out from the POS terminal. The POS terminal (the sales apparatus 30) informs the payment completion to the agency system of price payment through a base processing system. In this way, the shop in the electric mall receives the money.

As mentioned-above, various application examples of the first embodiment were explained. In the first embodiment of the present invention, the purchase information such as the coupon is stored in the terminal apparatus carried by the user and electronically transmitted. As a result, the settlement processing is effectively executed and a service of delicate sense based on the purchase activity of the user is presented. As for the user, the service is improved. As for the store, information for data mining is obtained and a regular customer is effectively acquired.

In the first embodiment, information is transmitted among the information distribution apparatus 10, the terminal apparatus 20, and the sales apparatus 30 in order to give various facilities for sales. In short, the system brings a user's convenience, a reduction of trader's burden, and a rationalization. If the first embodiment is more improved, the system can present a service of delicate sense according to personal needs of the user. Accordingly, such example is explained as a second embodiment.

(The second embodiment)

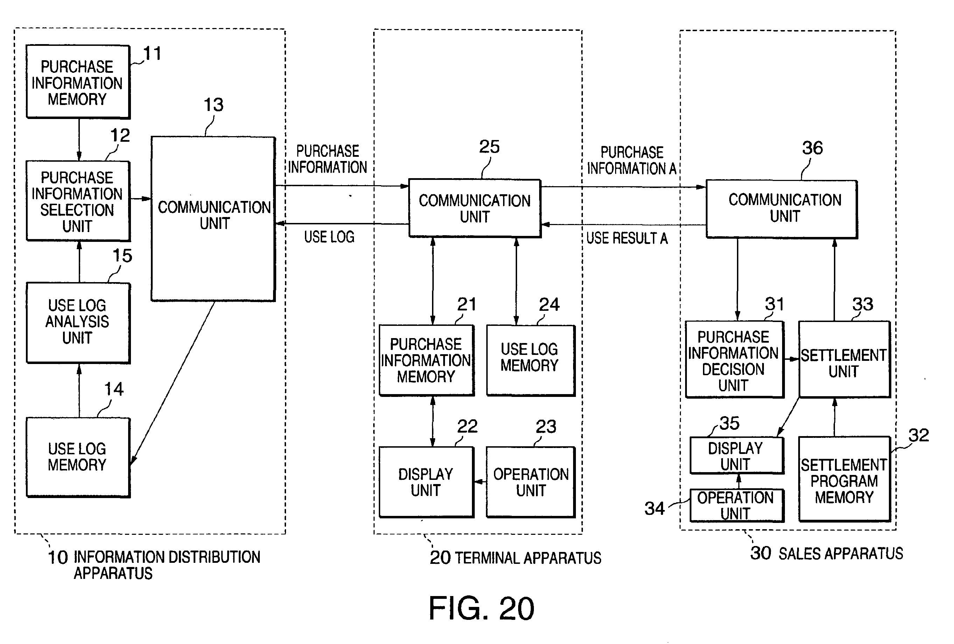

In the second embodiment, the purchase information suitable for each user is presented. The service of delicate sense to carefully select available information decided by many users and to distribute the available information is executed. In this case, as shown in Fig. 20, a system includes a use log analysis unit 15 added to the information distribution apparatus 10 in Fig. 15. The system in Fig. 20 consists of the information distribution apparatus 10, the terminal apparatus 20, and the sales apparatus 30. The terminal apparatus 20 and the sales apparatus 30 are basically the same as in the first embodiment in Fig. 1. Accordingly, the explanation is omitted. In the information distribution apparatus 10, the purchase information memory 11, the purchase information selection unit 12, the communication unit 13, and the use log memory 14 are also basically the same as in the first embodiment.

In the second embodiment, the use log analysis unit 15 is added in the information distribution apparatus 10. The use log analysis unit 15 analyzes a use tendency of the purchase information of each user by referring to the information stored in the use log memory 14. The purchase information selection unit 12 selects the purchase information matched with the user's liking or desire by using the analysis result of the personal user from the use log analysis unit 15. For example, if the purchase information is the recommendation information, the user, who actually used the store by watching the recommendation information, can newly add a comment to the use log. By analyzing the additional comment, the recommendation information more closely matched with the user is selected.

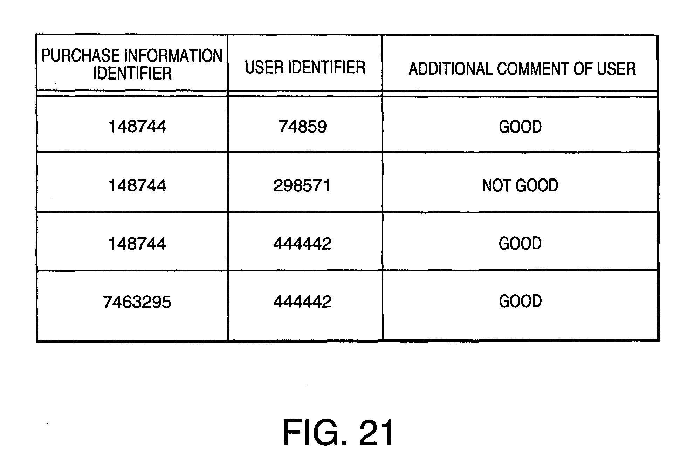

Fig. 21 is an example of the use log to which the user's comment is added. As for the recommendation information "The noodle shop A is good", three users respectively add comments. As a method for adding the comment, the terminal apparatus 20 of the user includes a function of text input. A first method for freely inputting a sentence using this function and a second method for selecting from a list by preparing a template are alternatively used. In the first method, the use log analysis unit 15 executes a syntax analysis and classifies the input comment of the user to one of several prepared templates. As the template, in case of the recommendation information for a restaurant, "good", "usual", "not good" are prepared.

As shown in Fig. 21, the use log of each user (for example, a user of the terminal apparatus 20 added the user identifier "74859", a user of the terminal apparatus 20 added the user identifier "444442") is stored in the use log memory 14. As for the additional comments of two users whose user identifier "74859""444442", contents "GOOD" of two additional comments are the same for the stores identified by the purchase information identifier "148744".

Now, assume that the terminal apparatus 20 of the user identifier "74859" is connected to the information distribution apparatus 10, and the terminal apparatus 20 requests a distribution of gourmet recommendation information for the information distribution apparatus 10. In the information distribution apparatus 10, the use log analysis unit 15 determines the recommendation information of the user identifier "444442" whose comment is the same as the user identifier "74859" according to the information in the use log memory 14, and searches for other recommendation information "GOOD" of the user identifier "444442". In Fig. 21, the purchase information identifier "7463295" is searched as the other recommendation information which the user of the user identifier "444442" evaluates "GOOD". Then, the use log analysis unit 15 indicates the purchase information selection unit 12 to select the purchase information identifier "7463295" to distribute to the terminal apparatus 20 of the user identifier "74859". Accordingly, in the Gourmet recommendation information that many users actually evaluates "GOOD", the purchase information selection unit 12 selects the recommendation information of a shop as a good reputation from the purchase information memory 11, and distributes the purchase information to other terminal apparatus 20.

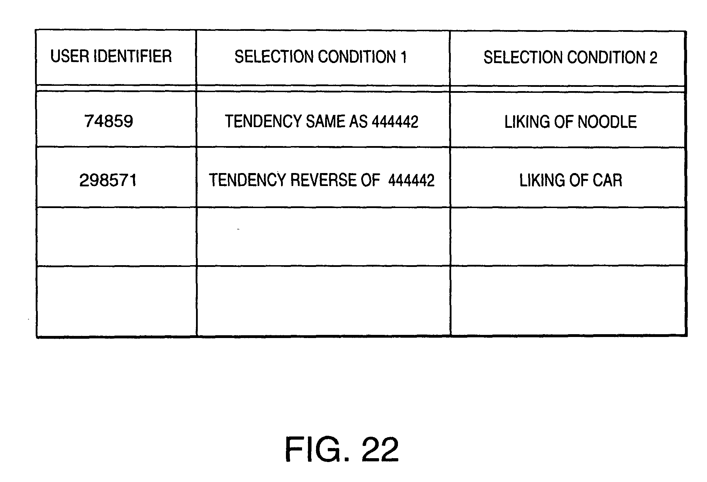

As another analysis example, the use log analysis unit 15 analyzes information that the user likes noodle from the use log of the user, and indicates the user's tendency to the purchase information selection unit 12. Furthermore, the analysis result of the use log analysis unit 15 is registered for each user. For example, the analysis result is recorded as a table format as shown in Fig. 22, and utilized by selection processing of the purchase information selection unit 12.

As mentioned-above, by adding the use log analysis unit 15, the actual evaluation result of the user is analyzed and utilized as a selection of the purchase information to be distributed. Accordingly, more suitable purchase information is selected for each user, and a service that information evaluated by many persons is carefully selected and distributed is executed.

(The third embodiment)

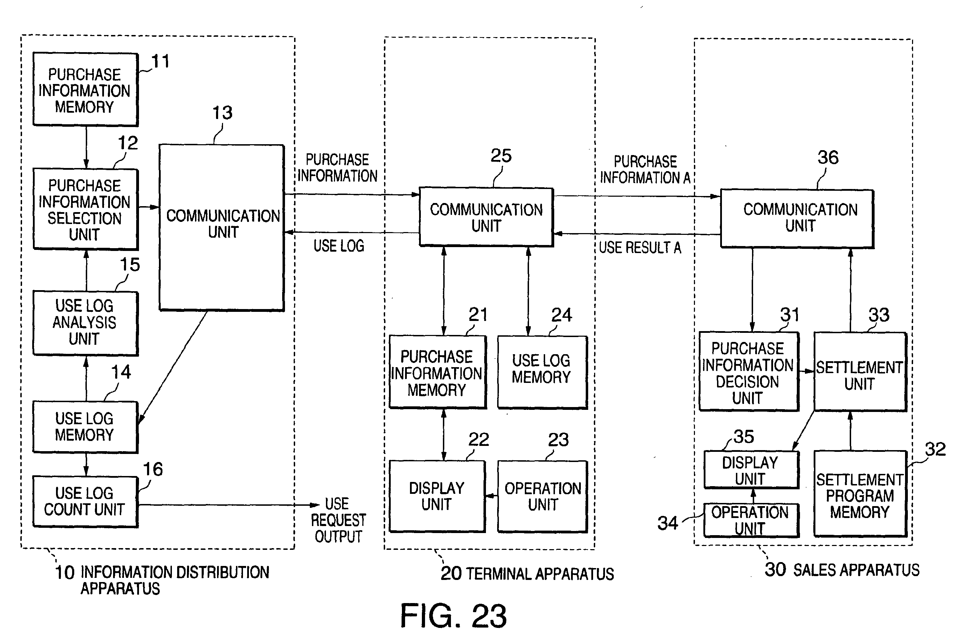

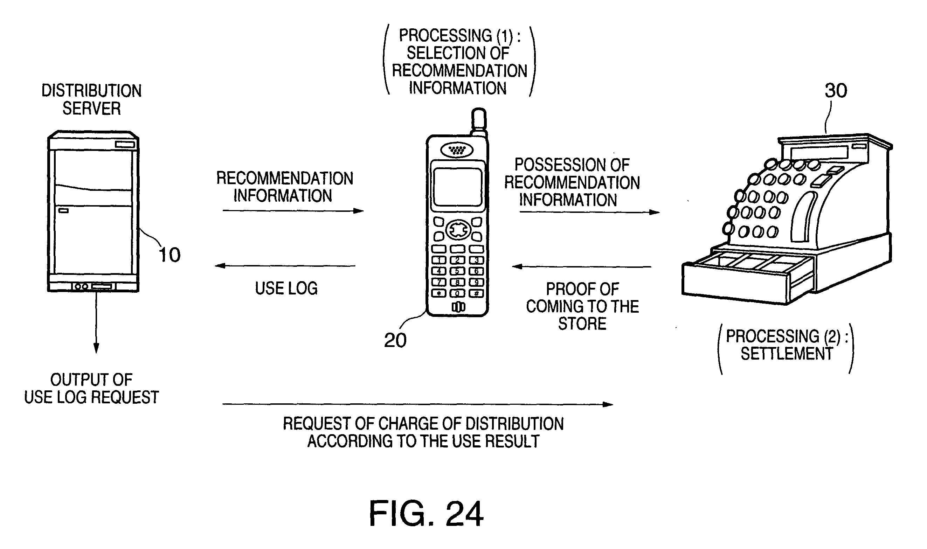

Next, as shown in Fig. 23, a system that a use log count unit 16 is added to the information distribution apparatus 10 shown in Fig. 20 is explained. In the information distribution apparatus 10 shown in Fig. 23, the use log count unit 16 classifies the use log recorded in the use log memory 14, and outputs the classified use log. For example, by referring to the store identifier of the use log in Fig. 5, a number of times purchase information is utilized for each store is counted and outputted. Then, as shown in Fig. 24, a bill to request a charge of distribution based on the use number is output to the store.

Furthermore, a transition of the use number of the purchase information is counted, and the purchase information necessary for a specialist's decision, which the use number is below a plan number or the use number decreases, is listed for each problem and outputted. The specialist is a staff of an information distribution service company managing the information distribution apparatus 10. The specialist analyzes the purchase information listed; determines a distribution method, content change of the purchase information, and stop of the distribution; and executes a maintenance to reflect the analysis result to the stored information in the purchase information memory 11 in order to manage a commercial employment of the information distribution apparatus 10.

Furthermore, in the second embodiment, the specialist analyzes comments added by users for the recommendation information. In this case, comments highly evaluated by many users are registered as new recommendation information. The information distribution service company to manage the information distribution apparatus 10 makes a contract for an agency to distribute information from the store or the cooperation, and executes a commercial activity to distribute the information from the store or the cooperation to the user.

In the present system, in case of contracting the agency to distribute the information from the store or the cooperation, in addition to a charge course to collect the fee as the contract charge based on the number of distributions of the purchase information, a course to charge according to the actual used number of the purchase information in the number of distribution is set. In this case, if the store or the cooperation requests the information distribution service company to distribute the purchase information to be utilized, all other burden is omitted. Furthermore, the store or the cooperation only pays the charge useful for collecting customers or promoting sales, and good results of purpose is effectively obtained.

In the above-mentioned method, an equal fee is uniformly charged based on the use number. However, a less expensive fee may be charged to the use number while effect of information distribution is small. Then, when the effect of information distribution is greater, an expensive fee may be charged to the use number. In this method, as for a venture cooperation or a small enterprising man in financial troubles, the cost burden to the enterprise activity reduces while the enterprise scale is small. If enterprise earnings increase and the enterprise scale becomes large, the cost burden corresponding to the enterprise activity may increase. This example is explained as a fourth embodiment.

(The fourth embodiment)

A system in cooperation with economic value to up the advertisement charge in proportion to the remarkable effect is explained as the fourth embodiment. In the fourth embodiment, the recommendation information and credit information are collected and distributed. The advertisement charge varies by the use frequency of the recommendation information and the credit information.

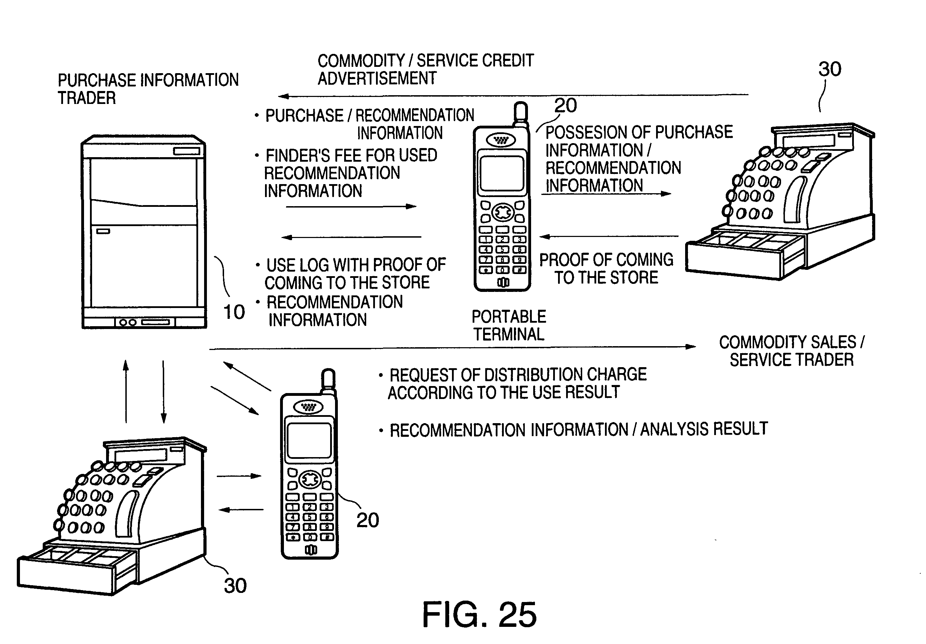

As shown in Fig. 25, a purchase information trader called "portal" prepares the information distribution apparatus 10, who contracts management of the advertisement and the credit information from a commodity sales/service trader who actually sales the commodity. The purchase information trader distributes this information to the user (a consumer carrying the terminal apparatus 20) through the information distribution apparatus 10, and supports the enterprise activity of the commodity sales/service trader by collecting the use information of the user. As things are, an ideal form of the information distribution apparatus 10 is utilization of a Web server in a communication network such as the Internet. An income source of the purchase information trader is the advertisement charge from the commodity sales/service trader. The advertisement charge is "$ M/view" representing a price of one view. "View" is the number N representing how many times the user clicks the advertisement in order to watch the content. Accordingly, the advertisement income is represented as follows.
$ M/view $\times$ N views

In order to increase the advertisement income, an increase of the view number N and a rise in price of the advertisement charge are necessary. In order to increase the view number N, a site presented by the purchase information trader must be evaluated for the user to watch. Furthermore, in order to raise the price of advertisement charge, value of the advertisement, i.e., the advertisement issue must contribute to raise the amount sold of the commodity sales/service trader.

As mentioned-above, the purchase information trader manages the distribution server (the information distribution apparatus 10), and distributes the advertisement/purchase information/recommendation information to the user. The user carries the portable terminal (the terminal apparatus 20) and actually utilizes the purchase information/ recommendation information. A commodity sales/service trader actually sells a commodity and presents a service to the user, and executes a settlement/sales processing. The settlement/sales processing is executed by the sales apparatus 30 using information from the portable terminal (the terminal apparatus 20). In this case, the use result (use log) is sent from the sales apparatus 30 to the terminal apparatus 20 or the distribution server (the information distribution apparatus 10), and stored. The use result includes used credit information with a proof of coming to the store or a settlement proof, and recommendation information actually used.

Accordingly, the distribution server (the information distribution apparatus 10) calculates the advertisement charge using the use log information, and collects the advertisement charge from the commodity sales/service trader as the income source. The advertisement charge M is a product of a weighted coefficient W and a standard advertisement charge Ms as follows. (The weighted coefficient W is a function of use number c of credit information including a proof of coming to the store or a settlement proof and use number r of information of word of mouth).

$$M = W(c, r) \times Ms$$

$$W(c, r) = \alpha \text{ (constant)} \times C/S \text{ (number of total sales)} \times r/R \text{(downloaded number of word of mouth)}$$

For example, $\alpha$ is a constant above "2.0". In short, if the credit use number C is above a half of the number S of total sales, contribution of the credit use is above "1.0". $\alpha$ is controlled to vary based on absolute value of the number S of total sales. As for the number of recommendations, the use number r is normalized using the download number R by the distribution server 10. If the download recommendation information is only utilized by the user who downloaded, r/R is below 1.0. However, after the user who downloaded utilizes the information, if he informs the value with the recommendation information to another user, as a result, the recommendation information over the downloaded number is utilized by the user's recommendation.

In order to reflect such an enlarged effect to increase the purchase information trader's income, when the portable terminal (terminal apparatus 20) is connected to the distribution server (the information distribution apparatus 10) of the purchase information trader, the reflection is easily realized by using the use log information transmitted from the portable terminal to the distribution server. In the distribution server of the purchase information trader, the use log with a proof of coming to the store sent from the portable terminal is classified to each commodity/each service, and distributed to corresponding commodity sales/service trader. Furthermore, if necessary, after the use log with the proof of coming to the store is classified to each commodity/each service, the user's utilization time is statistically processed, and the analysis result is distributed to corresponding commodity sales/service trader. Furthermore, the use log information includes the user identifier of the terminal apparatus 20. Accordingly, the user who presented the recommendation information is specified by the use log information, and the use situation of the recommendation information is summed up. As for the user who presented the recommendation information, a finder's or copyright fee may be paid according to the use frequency of the recommendation information.

As mentioned-above, in the fourth embodiment, by utilizing the present system to a commercial activity, a commercial system from which the purchase information trader, the user, and the advertisement owner respectively obtain the benefit is newly composed.

In the fourth embodiment, the advertisement charge and achievements of agency business go up by utilizing the credit information and the recommendation information. Accordingly, a great increase of income from the advertisement and the agency business is estimated. Furthermore, the purchase information trader utilized by many persons is rich in useful information such as the credit information or the information of word of mouth. Accordingly, it is very convenient for the user.

In the present invention, the user carries the terminal apparatus as the exclusive use. The purchase information for settlement service such as a payment of public fee as electric charges, a payment of purchase of ticket, or a commodity offered by Internet shopping is distributed to the terminal apparatus. In case the user utilizes these services, the terminal apparatus sends the purchase information to the sales apparatus of the service store and the settlement is simply processed by the sales apparatus.

Accordingly, compared to the prior art, inconveniences that the user brings a payment sheet of paper to the service store and a barcode printed on the payment sheet is read by a scanner of POS terminal at the register counter for settlement are removed. Furthermore, in the present invention, achievements of advertisement charge and agency business raise by using the credit information and the recommendation information. Accordingly, a great increase of income of the advertisement and the agency business is estimated. Furthermore, the purchase information trader utilized by many persons is rich in useful information such as the credit information or the recommendation information. Accordingly, it is very convenient for the user. As a result, the utilization value multiplicatively raises and a system which greatly contributes to the enterprise is composed.

A memory device, including a CD-ROM, floppy disk, hard disk magnetic tape, or semiconductor memory can be used to store instructions for causing a processor or computer to perform the processes described above.

Other embodiments of the invention will be apparent to those skilled in the art from consideration of the specification and practice of the invention disclosed herein. It is intended that the specification and examples be considered as exemplary only, with the true scope and sprit of the invention being indicated by the following claims.

## Claims

1.    A settlement system using purchase information, comprising:

an information distribution apparatus including:

a purchase information memory configured to store a purchase information used by a user to purchase a commodity or utilize a service in a sales apparatus;
a purchase information selection unit configured to select the purchase information to be distributed to a terminal apparatus of the user from said purchase information memory;
a communication unit configured to send the selected purchase information to the terminal apparatus and to receive use log information as a use result of the purchase information from the terminal apparatus; and
a use log memory configured to store a use record of the purchase information for each user according to the use log information;.
the terminal apparatus of the user including:

a first communication unit;
a purchase information memory configured to store the purchase information sent by the information distribution apparatus through said first communication unit;
a display unit configured to display the purchase information stored in said purchase information memory;
an operation unit configured to select the purchase information from among displayed purchase information, the selected purchase information being sent to the sales apparatus through said first communication unit; and
a use log memory configured to store use log information as a use result of the purchase information sent by the sales apparatus through said communication unit, the use log information being sent to the information distribution apparatus through said first communication unit; and
the sales apparatus including:

   a second communication unit configured to communicate with the terminal apparatus of the user;
   a purchase information decision unit configured to decide a classification of the purchase information sent by the terminal apparatus through said second communication unit;
   a settlement program memory configured to store a plurality of settlement programs each corresponding to each classification of the purchase information; and
   a settlement unit configured to select a settlement program corresponding to the classification of the purchase information decided by said purchase information decision unit from the plurality of settlement programs, and execute a settlement processing of the purchase information by using the settlement program, a use result of the purchase information being sent to the terminal apparatus through said second communication unit.

2.  The settlement system according to claim 1, wherein

   the purchase information is coupon information to receive a service such as a commodity discount or a gift,
   the information distribution apparatus comprises one of a server to distribute the coupon information, an Internet terminal connected to the server, and a base station of information source, and
   the settlement program is a coupon settlement program to execute a discount settlement or a gift selection for a commodity of the coupon information.

3.  The settlement system according to claim 2,       wherein the coupon information includes a purchase information identifier, an object commodity name, a privilege, an object store name, and a classification name.

4.  The settlement system according to claim 1-3, wherein,

   in the information distribution apparatus, said purchase information memory stores location information of each object store included in the coupon information, and
   said purchase information selection unit sends the coupon information of which the location information of the object store neighbors with a location of the terminal apparatus of the user when said communication unit receives the location of the terminal apparatus.

5.  The settlement system according to claim 1 or 2,
   wherein the use log information includes a purchase information identifier, a user identifier of the terminal apparatus, a store identifier used for the purchase information, and a use date.

6.  The settlement system according to any of claims 1-5,
   wherein, in the information distribution apparatus, said purchase information selection unit sends new purchase information to the terminal apparatus of a particular user through said communication unit if said purchase information memory stores the use log information of the particular user.

7.  The settlement system according to any of claims 1-6, wherein

   in the terminal apparatus, said operation unit inputs a selection condition for the user to receive the purchase information on said display unit, and
   in the information distribution apparatus, said purchase information selection unit sends new purchase information to the terminal apparatus of the user through said communication unit if said purchase information memory stores the new purchase information matched with the selection condition.

8.  The settlement system according to any of claims 1-7, wherein,

in the terminal apparatus, said display unit displays the coupon information usable by the sales apparatus when the terminal apparatus is connected to the sales apparatus, and

said communication unit sends the coupon information to the sales apparatus when said operation unit indicates the coupon information to be used by the sales apparatus on said display unit.

**9.** The settlement system according to claim 1, wherein

the purchase information is recommendation information for the store utilized by a user,

the information distribution apparatus compares one of a server to distribute the information of the word of mouth, an internet terminal connected to the server, and a base station of information source, and

the settlement program is a program to issue a proof of coming to the store or a proof of purchase in order to send the proof to the terminal apparatus.

**10.** The settlement system according to claim 9, wherein the information of word of mouth includes a purchase information identifier, an object store name, and a classification name.

**11.** The settlement system according to claim 1, wherein

the purchase information is a prize information,

the information distribution apparatus is one of a server to distribute the prize information, an internet terminal connected to the server, and a base station of information source, and

the settlement program is a program to issue a prize point if an object commodity of the prize is included in settlement commodities or if an object service of the prize is included in settlement services.

**12.** The settlement system according to claim 11, wherein

the prize information includes an identifier, an object commodity name, a number of obtained points, a number of necessary points, and a classification name, and

the prize point is sent as the use log information from the information distribution apparatus to the terminal apparatus of the user, and stored in said use log memory in the terminal apparatus.

**13.** The settlement system according to claim 12, wherein

in the terminal apparatus, the prize information and the prize point are sent to the information distribution apparatus in order to proceed a subscription of the prize if the prize point stored in said use log memory satisfies the number of necessary points described in the prize information.

**14.** The settlement system according to claim 1, wherein

the purchase information is use registration information for a user to count a use frequency in the sales apparatus,

the information distribution apparatus comprises one of a server to distribute the use registration information, an internet terminal connected to the server, and a base station of information source, and

the settlement program is a program to vary a winning probability of the prize according to the use frequency sent by the terminal apparatus of a user when an object commodity is purchased or an object service is utilized by the user.

**15.** The settlement system according to claim 14, wherein

the use registration information including the use frequency is sent from the terminal apparatus of the user to the sales apparatus when the object commodity is purchased or the object service is utilized by the user in the sales apparatus, and

updated use frequency as the use result is sent from the sales apparatus to the terminal apparatus, and stored in said use log memory in the terminal apparatus.

**16.** The settlement system according to claim 1, wherein

the purchase information is course information from a present location to a destination of a user,

the information distribution apparatus comprises a server to distribute the course information in response to information of the present location and the destination sent by the terminal apparatus of the user,
the sales apparatus comprises an automatic ticket vending machine,
the settlement program is a program to calculate a fare corresponding to the course information sent by the terminal apparatus when the user of the terminal apparatus purchases a ticket to the destination from the automatic ticket vending machine.

**17.** The settlement system according to claim 16,
wherein the automatic ticket vending machine turns on a light of a purchase button corresponding to the fare on a panel including a plurality of purchase buttons each corresponding to a different fare.

**18.** The settlement system according to claim 1, wherein

the purchase information is payment request information for a purchase procedure executed between an electronic trade server and a terminal apparatus of a user,
the information distribution apparatus comprises the electronic trade server, and
the settlement program is a program to receive a price and execute a settlement in response to the payment request information sent by the terminal apparatus when the user pays an amount of money described in the payment request to the sales apparatus as a payment counter.

**19.** The settlement system according to claim 18,
wherein the payment request information includes a purchase information identifier, a payment request number, an amount of money, and a classification name.

**20.** The settlement system according to claim 19,
wherein the sales apparatus sends a proof of payment to the terminal apparatus, and sends settlement information including the payment request number to the electronic trade server after the sales apparatus receives the amount of money from the user and executes a settlement of the payment.

**21.** The settlement system according to any of claims 1-20,
in the information distribution apparatus,

further comprising a use log analysis unit for analyzing a comment of the use log information of each user and generating a selection condition of each user to select suitable purchase information according to the analysis result, and
wherein said purchase information selection unit selects the purchase information from said purchase information memory according to the selection condition.

**22.** The settlement system according to claim 21, wherein

the use log information includes a purchase information identifier, a user identifier, and the comment of the user of the terminal apparatus, and
the selection condition includes the user identifier, and a condition representing a tendency of the user in comparison with other users.

**23.** The settlement system according to any of claims 1-22,
in the information distribution apparatus,
further comprising a use log for counting unit sums in the use log information for each store each of which makes a contract of distribution of purchase information, and for outputting a request of charge of distribution based on the sum result to the sales apparatus of each store.

**24.** A settlement system using purchase information, comprising:

a portable terminal apparatus of a user configured to receive purchase information used by the user to purchase a commodity or utilize a service, store the purchase information in a memory, and send comment information related to the commodity purchased or the service utilized by the user;
an information distribution apparatus of a purchase information trader configured to receive the comment information sent by the portable terminal apparatus, distribute the purchase information presented by a commodity sales or service trader and the comment information related to the purchase information to the portable terminal apparatus, and manage a frequency of use of the purchase information and the comment information; and

a sales apparatus of the commodity sales or service trader configured to execute a settlement and a proof of purchasing a commodity or utilizing a service according to the purchase information stored in the portable terminal apparatus when the user purchases the commodity or utilizes the service,

wherein said information distribution apparatus varies a charge of the purchase information trader to collect from the commodity sales or service trader according to the frequency of the purchase information and the comment information utilized.

**25.** An information distribution apparatus, comprising:

a purchase information memory configured to store purchase information used by a user to purchase a commodity or utilize a service;

a purchase information selection unit configured to select the purchase information to be distributed to a terminal apparatus of the user from said purchase information memory;

a communication unit configured to send the selected purchase information to the terminal apparatus and receive use log information as a use result of the selected purchase information from the terminal apparatus; and

a use log memory configured to store a use record of the selected purchase information for each user according to the use log information.

**26.** A terminal apparatus of a user, comprising:

a communication unit;

a purchase information memory configured to store purchase information sent by an information distribution apparatus through said communication unit, the purchase information being used by the user to purchase a commodity or utilize a service in a sales apparatus;

a display unit configured to display the purchase information stored in said purchase information memory;

an operation unit configured to select the purchase information from the displayed purchase information, the selected purchase information being sent to the sales apparatus through said communication unit; and

a use log memory configured to store use log information as a use result of the purchase information sent by the sales apparatus through said communication unit, the use log information being sent to the information distribution apparatus through said communication unit.

**27.** A sales apparatus, comprising;

a communication unit configured to communicate with a terminal apparatus of a user;

a purchase information decision unit configured to decide a classification of purchase information sent by the terminal apparatus through said communication unit;

a settlement program memory configured to store a plurality of settlement programs each corresponding to each classification of the purchase information; and

a settlement unit configured to select a settlement program corresponding to the classification of the purchase information decided by said purchase information decision unit from the plurality of settlement programs, and execute a settlement processing of the purchase information by using the settlement program, a use result of the purchase information being sent to the terminal apparatus through said communication unit.

**28.** An information distribution method, comprising the steps of:

storing purchase information used by a user to purchase a commodity or utilize a service;

selecting purchase information to be distributed to a terminal apparatus of the user;

sending the selected purchase information to the terminal apparatus;

receiving use log information as a use result of the selected purchase information from the terminal apparatus; and

storing a use record of the selected purchase information for each user according to the use log information.

**29.** A terminal method, comprising the steps of:

storing purchase information sent by an information distribution apparatus, the purchase information being used by the user to purchase a commodity or utilize a service in a sales apparatus;

displaying the stored purchase information;

selecting purchase information from the displayed purchase information;

sending the selected purchase information to the sales apparatus;

storing use log information as a use result of the selected purchase information sent by the sales apparatus; and

sending the use log information to the information distribution apparatus.

**30.** A sales method, comprising the steps of:

receiving purchase information sent by a terminal apparatus of a user;

deciding a classification of the purchase information;

selecting a settlement program corresponding to the classification of the purchase information form a plurality of stored settlement programs;

executing settlement processing of the purchase information using the settlement program; and

sending a use result of the purchase information to the terminal apparatus.

**31.** A computer-readable memory containing computer-readable instructions, comprising:

an instruction unit for causing a computer to store purchase information used by a user to purchase a commodity or utilize a service;

an instruction unit for causing a computer to select purchase information to be distributed to a terminal apparatus of the user;

an instruction unit for causing a computer to send the selected purchase information to the terminal apparatus;

an instruction unit for causing a computer to receive a use log information as a use result of the selected purchase information from the terminal apparatus; and

an instruction unit for causing a computer to store a use record of the selected purchase information for each user according to the use log information.

**32.** A computer-readable memory containing computer-readable instructions, comprising:

an instruction unit for causing a computer to store purchase information sent by an information distribution apparatus, the purchase information being used by a user to purchase a commodity or utilize a service in a sales apparatus;

an instruction unit for causing a computer to display the stored purchase information;

an instruction unit for causing a computer to select the purchase information from the displayed purchase information;

an instruction unit for causing a computer to send the selected purchase information to the sales apparatus;

an instruction unit for causing a computer to store use log information as a use result of the selected purchase information sent by the sales apparatus; and

an instruction unit for causing a computer to send the use log information to the information distribution apparatus.

**33.** A computer-readable memory containing computer-readable instructions, comprising:

an instruction unit for causing a computer to receive purchase information sent by a terminal apparatus of a user;

an instruction unit for causing a computer to decide a classification of the purchase information;

an instruction unit for causing a computer to select a settlement program corresponding to the classification of the purchase information from a plurality of settlement programs stored;

an instruction unit for causing a computer to execute a settlement processing of the purchase information by using the selected settlement program, and

an instruction unit for causing a computer to send a use result of the purchase information to the terminal apparatus.

FIG. 1

10 INFORMATION DISTRIBUTION APPARATUS

- 11 PURCHASE INFORMATION MEMORY
- 12 PURCHASE INFORMATION SELECTION UNIT
- 13 COMMUNICATION UNIT
- 14 USE LOG MEMORY

PURCHASE INFORMATION

USE LOG

20 TERMINAL APPARATUS

- 25 COMMUNICATION UNIT
- 21 PURCHASE INFORMATION MEMORY
- 24 USE LOG MEMORY
- 22 DISPLAY UNIT
- 23 OPERATION UNIT

PURCHASE INFORMATION A

USE RESULT A

30 SALES APPARATUS

- 36 COMMUNICATION UNIT
- 31 PURCHASE INFORMATION DECISION UNIT
- 33 SETTLEMENT UNIT
- 35 DISPLAY UNIT
- 34 OPERATION UNIT
- 32 SETTLEMENT PROGRAM MEMORY

EP 1 122 674 A2

PROCESSING (1) :
SELECTION OF COUPON,
INDICATION OF USE

DISTRIBUTION
SERVER

COUPON
INFORMATION

COUPON
INFORMATION

30

USE LOG

USE LOG

10

20

PORTABLE
TERMINAL

PROCESSING (2) :
SETTLEMENT OF COUPON

FIG. 2

EP 1 122 674 A2

| PURCHASE INFORMATION IDENTIFIER | OBJECT COMMODITY | PRIVILEGE | OBJECT STORE | CLASSIFICATION OF PURCHASE INFORMATION |
|---|---|---|---|---|
| 148739 | COLA | 8% DISCOUNT | CONVENIENCE STORE B | COUPON |
| 8475092 | LUNCH | $1 DISCOUNT | CONVENIENCE STORE B | COUPON |
| 847620 | FROZEN FOOD | 20% DISCOUNT | SUPERMARKET A | COUPON |

# FIG. 3

EP 1 122 674 A2

| STORE IDENTIFIER | STORE NAME | ADDRESS | LATITUDE, LONGITUDE |
|---|---|---|---|
| 498245 | CONVENIENCE STORE B | 1000 I STREET, N.W. | XX1, YY1 |
| 918472 | SUPERMARKET A | 1200 I STREET, N.W. | XX2, YY2 |
| 62876 | AB BOOKSTORE | 1300 I STREET, N.W. | XX3, YY3 |

FIG. 4

| PURCHASE INFORMATION IDENTIFIER | USER IDENTIFIER | USED STORE IDENTIFIER | USED DATE |
|---|---|---|---|
| 148739 | 74859 | 498245 | 1999/12/23, 18:25 |
| 8475092 | 298571 | 498245 | 1999/06/10, 10:40 |
| 847620 | 444442 | 918472 | 2000/01/09, 12:30 |

# FIG. 5

EP 1 122 674 A2

| PURCHASE INFORMATION IDENTIFIER | USED STORE IDENTIFIER | USED DATE |
|---|---|---|
| 148739 | 498245 | 1999/12/23, 18:25 |
| 8475092 | 498245 | 1999/06/10, 10:40 |
| 847620 | 918472 | 2000/01/09, 12:30 |

# FIG. 6

EXECUTE A
CONNECTION PROCESSING
TO THE TERMINAL APPARATUS   S71

DOES
THE TERMINAL APPARATUS
STORE A USE LOG ?   S72

NO

YES

RECEIVE THE USE LOG AND
STORE IT IN THE USE LOG
MEMORY   S73

SELECT NEW PURCHASE
INFORMATION AND SEND IT   S74

EXECUTE A CUT
PROCESSING TO THE
TERMINAL APPARATUS   S75

FIG. 7

EXECUTE A
CONNECTION PROCESSING
TO THE SALES APPARATUS — S81

DOES
THE TERMINAL APPARATUS
STORE A USABLE
COUPON ? — S82

NO

YES

DOES
THE USER UTILIZE
THE COUPON ? — S83

NO

YES

SEND THE COUPON AND
RECEIVE A USE RESULT — S84

EXECUTE A CUT
PROCESSING TO THE
SALES APPARATUS — S85

# FIG. 8

PURCHASE INFORMATION MENU

1. NOTIFICATION OF COUPON USE

2. NOTIFICATION OF PAYMENT REQUEST

3. CONFIRMATION OF INFORMATION

# FIG. 9

COUPON CONFIRMATION SCREEN

    1. COLA   8%   DISCOUNT

    2. PIZZA  $1  DISCOUNT

    USE         CANCEL

# FIG. 10

DISTRIBUTION
SERVER

PROCESSING (1) :
SELECTION OF
RECOMMENDATION
INFORMATION

30

RECOMMENDATION
INFORMATION

POSSESSION OF
RECOMMENDATION
INFORMATION

USE LOG

PROOF OF
COMING TO THE
STORE

10

20

PORTABLE
TERMINAL

PROCESSING (2) :
SETTLEMENT
PROCESSING

FIG. 11

| PURCHASE INFORMATION IDENTIFIER | RECOMMENDATION INFORMATION | OBJECT STORE | CLASSIFICATION OF PURCHASE INFORMATION |
|---|---|---|---|
| 148744 | GOOD NOODLES | NOODLE SHOP A | RECOMMENDATION |
| 8475010 | GOOD SEAFOOD SERVED IN THE POT | TAVERN B | RECOMMENDATION |
| 758305 | INEXPENSIVE CHEESE CAKE | TEAROOM C | RECOMMENDATION |

# FIG. 12

PROCESSING (1) :
REGISTRATION OF
PRIZE PARTICIPATION

PROCESSING (2) :
PURCHASE OF OBJECT
COMMODITY OR
UTILIZATION OF
OBJECT SERVICE

10

20

30

PRIZE
PARTICIPATION
INFORMATION

PRIZE
PARTICIPATION
INFORMATION

PRIZE
SUBSCRIPTION
INFORMATION

PRIZE POINT

DISTRIBUTION
SERVER

PORTABLE
TERMINAL

POS OR VENDING MACHINE

PROCESSING (3) :
PROCEDURE OF
PRIZE SUBSCRIPTION

FIG. 13

EP 1 122 674 A2

| PURCHASE INFORMATION IDENTIFIER | OBJECT COMMODITY | POINT | NUMBER OF NECESSARY POINT | CLASSIFICATION OF PURCHASE INFORMATION |
|---|---|---|---|---|
| 148739 | COLA | 1 | 12 | PRIZE PARTICIPATION |
|  |  |  |  |  |
|  |  |  |  |  |

FIG. 14

EP 1 122 674 A2

FIG. 15

EP 1 122 674 A2

PROCESSING (1):
RETRIEVAL OF
COURSE

PROCESSING (2):
PURCHASE OF TICKET

10

COURSE
INFORMATION

COURSE
INFORMATION

TICKET
VENDING
MACHINE

30

USE LOG

USE RESULT A

DISTRIBUTION
SERVER

20

PORTABLE
TERMINAL

LIGHTING OF A
PURCHASE BUTTON
CORRESPONDING TO
THE DESTINATION

FIG. 16

EP 1 122 674 A2

**FIG. 17**

PROCESSING (1) : PROCEDURE OF PURCHASE
PROCESSING (2) : SELECTION OF PAYMENT
REQUEST INFORMATION AND REQUEST OF
SETTLEMENT

PAYMENT REQUEST INFORMATION

PAYMENT REQUEST INFORMATION

PAYMENT PROOF INFORMATION

(1) PURCHASE PROCEDURE ON Web

ELECTRONIC MALL

PROCESSING (3) : RECEIPT OF THE PRICE AND EXECUTION OF SETTLEMENT

PRICE, SETTLEMENT INFORMATION

EP 1 122 674 A2

PURCHASE  COMMODITY

   COMMODITY : SUPER DIET  A

   QUANTITY    : 1

   PRICE       : $70

INDICATION OF PAYMENT METHOD

PRINT A PAYMENT REQUEST FORM

TRANSFER A PAYMENT REQUEST INFORMATION

# FIG. 18

| PURCHASE INFORMATION IDENTIFIER | PAYMENT REQUEST NUMBER | AMOUNT OF MONEY | CLASSIFICATION OF PURCHASE INFORMATION |
| --- | --- | --- | --- |
| 826409 | 236846 | $ 70 | PAYMENT REQUEST |
|  |  |  |  |
|  |  |  |  |

## FIG. 19

EP 1 122 674 A2

FIG. 20

10 INFORMATION DISTRIBUTION APPARATUS

- 11 PURCHASE INFORMATION MEMORY
- 12 PURCHASE INFORMATION SELECTION UNIT
- 13 COMMUNICATION UNIT
- 14 USE LOG MEMORY
- 15 USE LOG ANALYSIS UNIT

20 TERMINAL APPARATUS

- 21 PURCHASE INFORMATION MEMORY
- 22 DISPLAY UNIT
- 23 OPERATION UNIT
- 24 USE LOG MEMORY
- 25 COMMUNICATION UNIT

30 SALES APPARATUS

- 31 PURCHASE INFORMATION DECISION UNIT
- 32 SETTLEMENT PROGRAM MEMORY
- 33 SETTLEMENT UNIT
- 34 OPERATION UNIT
- 35 DISPLAY UNIT
- 36 COMMUNICATION UNIT

PURCHASE INFORMATION

USE LOG

PURCHASE INFORMATION A

USE RESULT A

EP 1 122 674 A2

| PURCHASE INFORMATION IDENTIFIER | USER IDENTIFIER | ADDITIONAL COMMENT OF USER |
|---|---|---|
| 148744 | 74859 | GOOD |
| 148744 | 298571 | NOT GOOD |
| 148744 | 444442 | GOOD |
| 7463295 | 444442 | GOOD |

FIG. 21

| USER IDENTIFIER | SELECTION CONDITION 1 | SELECTION CONDITION 2 |
|---|---|---|
| 74859 | TENDENCY SAME AS 444442 | LIKING OF NOODLE |
| 298571 | TENDENCY REVERSE OF 444442 | LIKING OF CAR |
|  |  |  |
|  |  |  |

FIG. 22

FIG. 23

DISTRIBUTION
SERVER

PROCESSING (1) :
SELECTION OF
RECOMMENDATION
INFORMATION

30

RECOMMENDATION
INFORMATION →

POSSESSION OF
RECOMMENDATION
INFORMATION →

10

← USE LOG

← PROOF OF
COMING TO THE
STORE

20

PROCESSING (2) :
SETTLEMENT

OUTPUT OF
USE LOG REQUEST

REQUEST OF CHARGE OF DISTRIBUTION
ACCORDING TO THE USE RESULT →

# FIG. 24

EP 1 122 674 A2

PURCHASE INFORMATION TRADER

COMMODITY / SERVICE CREDIT ADVERTISEMENT

• PURCHASE / RECOMMENDATION INFORMATION

• FINDER'S FEE FOR USED RECOMMENDATION INFORMATION

POSSESION OF PURCHASE INFORMATION / RECOMMENDATION INFORMATION

• USE LOG WITH PROOF OF COMING TO THE STORE

• RECOMMENDATION INFORMATION

PROOF OF COMING TO THE STORE

PORTABLE TERMINAL

COMMODITY SALES / SERVICE TRADER

• REQUEST OF DISTRIBUTION CHARGE ACCORDING TO THE USE RESULT

• RECOMMENDATION INFORMATION / ANALYSIS RESULT

FIG. 25

EP 1 122 674 A2